# EUROPEAN PATENT APPLICATION

(11) **EP 3 419 343 A1**
(43) Date of publication of application: **26.12.2018**
(21) Application number: 17753249.6
(22) Date of filing: 15.02.2017
(51) Int. Cl.: H04W 48/18, H04W 72/04, H04W 76/02, H04W 80/10

(54) **TERMINAL DEVICE, MOBILITY MANAGEMENT ENTITY (MME), AND COMMUNICATION CONTROL METHOD**

(30) Priority: 16.02.2016 JP 2016026667
(71) Applicant: Sharp Kabushiki Kaisha, Sakai City, Osaka 590-8522 (JP)
(72) Inventor: KAWASAKI Yudai, Sakai City, Osaka 590-8522 (JP); ARAMOTO Masafumi, Sakai City, Osaka 590-8522 (JP)
(74) Representative: Müller Hoffmann & Partner
(86) International application number: PCT/JP2017/005595
(87) International publication number: WO 2017/141993

(57) **Abstract**

A communication control method for a terminal apparatus according to the present invention includes the steps of: receiving, from the core network via the base station apparatus, a modify EPS bearer context request including at least first identification information and/or the first bearer identification information and/or information identifying a flow for communicating by using an efficient path, the first identification information being information indicating that a communication path is the efficient path; and changing the efficient path from the second PDN connection to the first PDN connection. With this communication control method, a preferable communication procedure in which a terminal performs communication by using an optimal communication path, is provided.

## Description

### Technical Field

The present invention relates to a terminal apparatus, a Mobility Management Entity (MME), and a communication control method.

### Background Art

The 3rd Generation Partnership Project (3GPP), which undertakes activities for standardizing recent mobile communication systems, discusses System Architecture Enhancement (SAE), which is system architecture of the Long Term Evolution (LTE). 3GPP is in the process of creating specifications for the Evolved Packet System (EPS) as a communication system that realizes an all-IP architecture. Note that a core network constituting EPS is called an Evolved Packet Core (EPC).

Further, in 3GPP, Architecture for Next Generation System (NexGen) discusses recently as a next-generation communication technique designed for a diversity of terminals. In the NexGen, technical problems of connecting a diversity of terminals to a cellular network are extracted and solutions for the problems are issued as specifications.

For example, optimization of a communication procedure for a terminal requiring high-speed communication, or optimization of a communication procedure for a terminal for which efficiency in power consumption needs to be enhanced to enable a battery to be maintained for several years, may be given as examples of required conditions.

Further, optimization or diversification of mobility for simultaneously supporting terminals with a low movement frequency, such as fixed terminals, and terminals with a high movement frequency, such as terminals provided in vehicles or the like, may also be given as examples of required conditions.

Moreover, provision, selection, and the like of a communication path optimal for a terminal may also be given as examples of required conditions.

### Citation List

### Non Patent Literature

NPL 1: 3rd Generation Partnership Project; Technical Specification Group Services and System Aspects; Study on Architecture for Next Generation System (Release 14)

### Summary of Invention

### Technical Problem

In the NexGen, discussions are underway for optimization of a communication path of a terminal and selection of an optimal communication path.

More specifically, discussions are underway to provide, through optimization of a communication path, data communication suitable for a terminal.

However, procedure steps for selecting a communication path optimal for a terminal and selecting a communication path for a terminal and means for changing an optimal communication path have not yet been specified.

The present invention has been made in consideration of these circumstances, and an object of the present invention is to provide means for selecting a communication path optimal for a terminal and means for changing an optimal communication path.

### Solution to Problem

To achieve the above-described object, a communication control method for a terminal apparatus includes the steps of: receiving, from a core network via a base station apparatus, an attach accept message including at least first bearer identification information and/or a first APN and/or a first IP address, and establishing a first Packet Data Network (PDN) connection with a first Packet Data Gateway (PGW); receiving, from the core network via the base station apparatus, an activate default EPS bearer context request message including at least second bearer identification information and/or a second APN and/or a second IP address and establishing a second PDN connection with a second PGW; receiving, from the core network via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path; and changing the efficient path from the second PDN connection to the first PDN connection.

A communication control method for a terminal apparatus according to an aspect of the present invention includes the steps of: receiving, from a core network via a base station apparatus, an attach accept message including at least first bearer identification information and/or a first APN and/or a first IP address, and establishing a first Packet Data Network (PDN) connection with a first Packet Data Gateway (PGW); receiving, from the core network via the base station apparatus, an activate default EPS bearer context request message including at least second bearer identification information and/or a second APN and/or a second IP address and establishing a second PDN connection with a second PGW; transmitting, to the core network via the base station apparatus, a bearer resource modification request message including at least first identification information and/or the first bearer identification information and/or a Traffic Flow Template (TFT) identifying a flow for communicating by using an efficient path, the first identification information being information indicating a request to change the efficient path; and changing the efficient path from the second PDN connection to the first PDN connection.

A communication control method for a Mobility Management Entity (MME) according to an aspect of the present invention includes the steps of: transmitting, to a terminal apparatus via a base station apparatus, an attach accept message including at least first bearer identification information and/or a first APN and/or a first IP address, and storing the first bearer identification information and/or the first APN and/or the first IP address associated with a first Packet Data Network (PDN) connection established between the terminal apparatus and a first Packet Data Gateway (PGW); transmitting, to the terminal apparatus via the base station apparatus, an activate default EPS bearer context request message including at least second bearer identification information and/or a second APN and/or a second IP address and storing the second bearer identification information and/or the second APN and/or the second IP address associated with a second Packet Data Network (PDN) connection established between the terminal apparatus and a second Packet Data Gateway (PGW); and transmitting, to the terminal apparatus via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path.

A communication control method for a Mobility Management Entity (MME) according to an aspect of the present invention includes the steps of: transmitting, to a terminal apparatus via a base station apparatus, an attach accept message including at least first bearer identification information and/or a first APN and/or a first IP address, and storing the first bearer identification information and/or the first APN and/or the first IP address associated with a first Packet Data Network (PDN) connection established between the terminal apparatus and a first Packet Data Gateway (PGW); transmitting, to the terminal apparatus via the base station apparatus, an activate default EPS bearer context request message including at least second bearer identification information and/or a second APN and/or a second IP address and storing the second bearer identification information and/or the second APN and/or the second IP address associated with a second Packet Data Network (PDN) connection established between the terminal apparatus and a second Packet Data Gateway (PGW); and for change of an efficient path, receiving, from the terminal apparatus via the base station apparatus, a bearer resource modification request message including at least first identification information and/or the first bearer identification information and/or a Traffic Flow Template (TFT) identifying a flow for communicating by using the efficient path, the first identification information being information indicating that a communication path is the efficient path.

A terminal apparatus according to an aspect of the present invention includes: a control unit configured to receive, from a core network via a base station apparatus, an attach accept message including at least first bearer identification information and/or a first APN and/or a first IP address, and establish a first Packet Data Network (PDN) connection with a first Packet Data Gateway (PGW), the control unit receiving, from the core network via the base station apparatus, an activate default EPS bearer context request message including at least second bearer identification information and/or a second APN and/or a second IP address, and establishing a second PDN connection with a second PGW; and a transmission and/or reception unit configured to receive, from the core network via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path, the control unit changing the efficient path from the second PDN connection to the first PDN connection.

A terminal apparatus according to an aspect of the present invention includes: a control unit configured to receive, from a core network via a base station apparatus, an attach accept message including at least first bearer identification information and/or a first APN and/or a first IP address, and establish a first Packet Data Network (PDN) connection with a first Packet Data Gateway (PGW), the control unit receiving, from the core network via the base station apparatus, an activate default EPS bearer context request message including at least second bearer identification information and/or a second APN and/or a second IP address, and establishing a second PDN connection with a second PGW; and a transmission and/or reception unit configured to transmit, to the core network via the base station apparatus, a bearer resource modification request message including at least first identification information and/or the first bearer identification information and/or a Traffic Flow Template (TFT) identifying a flow for communicating an efficient path, the first identification information being information indicating a request to change the efficient path, the control unit changing the efficient path from the second PDN connection to the first PDN connection.

A Mobility Management Entity (MME) according to an aspect of the present invention includes: a transmission and/or reception unit configured to transmit, to a terminal apparatus via a base station apparatus, an attach accept message including at least first bearer identification information and/or a first APN and/or a first IP address; and a control unit configured to store the first bearer identification information and/or the first APN and/or the first IP address associated with a first Packet Data Network (PDN) connection established between the terminal apparatus and a first Packet Data Gateway (PGW). The transmission and/or reception unit transmits, to the terminal apparatus via the base station apparatus, an activate default EPS bearer context request message including at least second bearer identification information and/or a second APN and/or a second IP address, the control unit stores the second bearer identification information and/or the second APN and/or the second IP address associated with a second Packet Data Network (PDN) connection established between the terminal apparatus and a second Packet Data Gateway (PGW), and the transmission and/or reception unit transmits, to the terminal apparatus via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path.

A Mobility Management Entity (MME) according to an aspect of the present invention includes: a transmission and/or reception unit configured to transmit, to a terminal apparatus via a base station apparatus, an attach accept message including at least first bearer identification information and/or a first APN and/or a first IP address; and a control unit configured to store the first bearer identification information and/or the first APN and/or the first IP address associated with a first Packet Data Network (PDN) connection established between the terminal apparatus and a first Packet Data Gateway (PGW). The transmission and/or reception unit transmits, to the terminal apparatus via the base station apparatus, an activate default EPS bearer context request message including at least second bearer identification information and/or a second APN and/or a second IP address, the control unit stores the second bearer identification information and/or the second APN and/or the second IP address associated with a second Packet Data Network (PDN) connection established between the terminal apparatus and a second Packet Data Gateway (PGW), and for change of an efficient path, the transmission and/or reception unit receives, from the terminal apparatus via the base station apparatus, a bearer resource modification request message including at least first identification information and/or the first bearer identification information and/or a Traffic Flow Template (TFT) identifying a flow for communicating by using the efficient path, the first identification information being information indicating that a communication path is the efficient path.

### Advantageous Effects of Invention

According to the present invention, a CIoT terminal can communicate by attaching to and/or detaching from a core network capable of providing multiple transmission methods including a user data transmission method optimized for the CIoT terminal.

### Brief Description of Drawings

FIG. 1 is a diagram illustrating an overview of a mobile communication system.
FIGS. 2A and 2B are diagrams illustrating an example of a configuration of an IP mobile communication network, and the like.
FIGS. 3A and 3B are diagrams illustrating an example of a configuration of an IP mobile communication network, and the like.
FIG. 4 is a diagram illustrating a device configuration of an eNB.
FIG. 5 is a diagram illustrating a first state in a present embodiment.
FIG. 6 is a diagram illustrating a device configuration of an MME.
FIG. 7 is a diagram illustrating a storage unit of the MME.
FIG. 8 is a diagram illustrating the storage unit of the MME.
FIG. 9 is a diagram illustrating the storage unit of the MME.
FIG. 10 is a diagram illustrating the storage unit of the MME.
FIG. 11 is a diagram illustrating the storage unit of the MME.
FIG. 12 is a diagram illustrating the storage unit of the MME.
FIG. 13 is a diagram illustrating a device configuration of a SGW.
FIG. 14 is a diagram illustrating a storage unit of the SGW.
FIG. 15 is a diagram illustrating the storage unit of the SGW.
FIG. 16 is a diagram illustrating a device configuration of a PGW.
FIG. 17 is a diagram illustrating a storage unit of the PGW.
FIG. 18 is a diagram illustrating the storage unit of the PGW.
FIG. 19 is a diagram illustrating the storage unit of the PGW.
FIG. 20 is a diagram illustrating a device configuration of a UE.
FIG. 21 is a diagram illustrating a storage unit of the UE.
FIG. 22 is a diagram illustrating an outline of a communication procedure.
FIG. 23 is a diagram illustrating an attach procedure.
FIG. 24 is a diagram illustrating a PDN connectivity procedure.
FIG. 25 is a diagram illustrating a first efficient path change procedure.
FIG. 26 is a diagram illustrating a second efficient path change procedure.
FIG. 27 is a diagram illustrating a first bearer update procedure.
FIG. 28 is a diagram illustrating a second bearer update procedure.

### Description of Embodiments

Hereinafter, a preferred embodiment for carrying out the present invention will be described with reference to the drawings. Note that as an example, the present embodiment describes an embodiment of a mobile communication system to which the present invention is applied.

### 1. Embodiment

### 1.1. System Overview

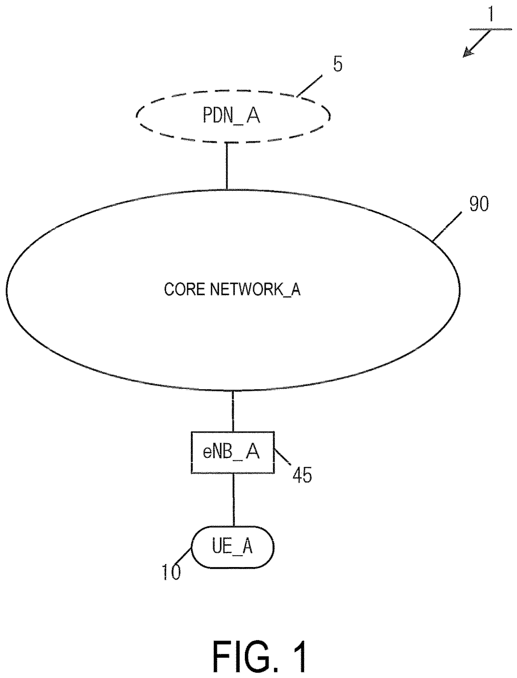

FIG. 1 is a diagram illustrating an overview of a mobile communication system according to the present embodiment. As illustrated in FIG. 1, a mobile communication system 1 includes a mobile terminal apparatus UE_A 10, an eNB_A 45, a core network_A 90, and a PDN_A 5.

Here, the UE_A 10 may be any wirelessly connectable terminal apparatus, and may be a User equipment (UE), a Mobile equipment (ME), or a Mobile Station (MS).

Alternatively, the UE_A 10 may be a CIoT terminal. Note that the CIoT terminal is an IoT terminal connectable to the core network A 90, where the IoT terminal includes a mobile phone terminal such as a smartphone and may be a variety of IT equipment such as a personal computer or sensor devices.

In other words, in a case that the UE_A 10 is the CIoT terminal, the UE_A 10 may request a connection optimized for the CIoT terminal, based on a policy of the UE_A 10 or a request from the network, or may request the known connection. Alternatively, the UE_A 10 may be configured as a terminal apparatus which connects to the core network_A 90 only by a communication procedure optimized for the CIoT terminal beforehand at the time of shipping.

Here, the core network_A 90 refers to an IP mobile communication network run by a Mobile Operator.

For example, the core network_A 90 may be a core network for the mobile operator that runs and manages the mobile communication system 1, or may be a core network for a virtual mobile operator such as a Mobile Virtual Network Operator (MVNO). Alternatively, the core network_A 90 may be a core network for accommodating the CIoT terminal.

Additionally, the eNB_A 45 is a base station constituting a radio access network used by the UE_A 10 to connect to the core network_A 90. In other words, the UE_A 10 connects to the core network_A 90 by using the eNB_A 45.

Additionally, the core network_A 90 is connected to the PDN_A 5. The PDN_A 5 is a packet data service network which provides a communication service to the UE_A 10, and may be configured for each service. A communication terminal is connected to the PDN, the UE_A 10 can transmit and/or receive user data to/from the communication terminal located in the PDN_A 5.

Note that the user data may be data transmitted and/or received between the UE_A 10 and a device included in the PDN_A 5. Note that the UE_A 10 transmits the user data to the PDN_A 5 via the core network_A 90. In other words, the UE_A 10 transmits and/or receives the user data to/from the core network_A 90 in order to transmit and/or receive the user data to/from the PDN_A 5. More specifically, the UE_A 10 transmits and/or receives the user data to/from a gateway device in the core network_A 90, such as a PGW_A 30 and a C-SGN_A 95, in order to transmit and/or receive the user data to/from the PDN_A 5.

Next, an example of a configuration of the core network_A 90 will be described. In the present embodiment, two configuration examples of the core network_A 90 will be described.

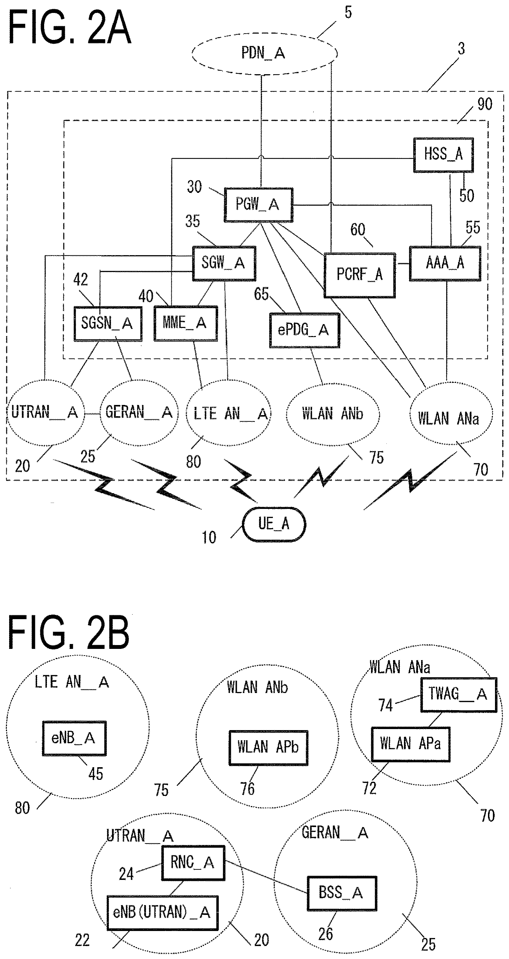

FIGS. 2A and 2B illustrate an example of the configuration of the core network_90. The core network_A 90 in FIG. 2A includes a Home Subscriber Server (HSS)_A 50, an Authentication, Authorization, Accounting (AAA)_A 55, a Policy and Charging Rules Function (PCRF)_A 60, a Packet Data Network Gateway (PGW)_A 30, an enhanced Packet Data Gateway (ePDG)_A 65, a Serving Gateway (SGW)_A 35, a Mobility Management Entity (MME)_A 40, and a Serving GPRS Support Node (SGSN)_A 42.

Furthermore, the core network_A 90 is capable of connecting to multiple radio access networks (an LTE AN_A 80, a WLAN ANb 75, a WLAN ANa 70, a UTRAN_A 20, and a GERAN_A 25).

Such a radio access network may be configured by connecting to multiple different access networks, or may be configured by connecting to either one of the access networks. Moreover, the UE_A 10 is capable of wirelessly connecting to the radio access network.

Moreover, a WLAN Access Network b (WLAN ANb 75) that connects to the core network via the ePDG_A 65 and a WLAN Access Network a (WLAN ANa 75) that connects to the PGW_A, the PCRF_A 60, and the AAA_A 55 can be configured as access networks connectable in a WLAN access system.

Note that each device has a similar configuration to those of the devices of the related art in a mobile communication system using EPS, and thus detailed descriptions thereof will be omitted. Each device will be described briefly hereinafter.

The PGW_A 30 is connected to the PDN_A 5, an SGW_A 35, the ePDG_A 65, the WLAN ANa 70, the PCRF_A 60, and the AAA_A 55 and is a relay device configured to transfer user data by functioning as a gateway device between the PDN_A 5 and the core network_A 90.

The SGW_A 35 is connected to the PGW 30, the MME_A 40, the LTE AN 80, the SGSN_A 42, and the UTRAN_A 20, and serves as a relay device configured to transfer user data by functioning as a gateway device between the core network_A 90 and the 3GPP access network (the UTRAN_A 20, the GERAN_A 25, the LTE AN_A 80).

The MME_A 40 is connected to the SGW_A 35, the LTE AN 80, and the HSS_A 50, and serves as an access control device configured to perform location information management and access control for the UE_A 10 via the LTE AN 80. Furthermore, the core network_A 90 may include multiple location management devices. For example, a location management device different from the MME_A 40 may be configured. As with the MME_A 40, the location management device different from the MME_A 40 may be connected to the SGW_A 35, the LTE AN 80, and the HSS_A 50.

Furthermore, in a case that multiple MMEs are included in the core network_A 90, the MMEs may be connected to each other. With this configuration, the context of the UE_A 10 may be transmitted and/or received between the MMEs.

The HSS_A 50 is connected to the MME_A 40 and the AAA_A 55 and is a managing node configured to manage subscriber information. The subscriber information of the HSS_A 50 is referred to during MME_A 40 access control, for example. Moreover, the HSS_A 50 may be connected to the location management device different from the MME_A 40.

The AAA_A 55 is connected to the PGW 30, the HSS_A 50, the PCRF_A 60, and the WLAN ANa 70, and is configured to perform access control for the UE_A 10 connected via the WLAN ANa 70.

The PCRF_A 60 is connected to the PGW_A 30, the WLAN ANa 75, the AAA_A 55, and the PDN_A 5 and is configured to perform QoS management on data delivery. For example, the PCRF_A 60 manages QoS of a communication path between the UE_A 10 and the PDN_A 5.

The ePDG_A 65 is connected to the PGW 30 and the WLAN ANb 75 and is configured to deliver user data by functioning as a gateway device between the core network_A 90 and the WLAN ANb 75.

The SGSN_A 42 is connected to the UTRAN_A 20, the GERAN_A 25, and the SGW_A 35 and is a control device for location management between a 3G/2G access network (UTRAN/GERAN) and the LTE access network (E-UTRAN). In addition, the SGSN_A 42 has functions of: selecting the PGW and the SGW; managing a time zone of the UE; and selecting the MME at the time of handover to the E-UTRAN.

Additionally, as illustrated in FIG. 2B, each radio access network includes apparatuses to which the UE_A 10 is actually connected (such as a base station apparatus and an access point apparatus), and the like. The apparatuses used in these connections can be thought of as apparatuses adapted to the radio access networks.

In the present embodiment, the LTE AN 80 includes the eNB_A 45. The eNB_A 45 is a radio base station to which the UE_A 10 connects in an LTE access system, and the LTE AN A 80 may include one or multiple radio base stations.

The WLAN ANa 70 is configured to include a WLAN APa 72 and a TWAG_A 74. The WLAN APa 72 is a radio base station to which the UE_A 10 connects in the WLAN access system trusted by the operator running the core network_A 90, and the WLAN ANa 70 may include one or multiple radio base stations. The TWAG_A 74 serves as a gateway device between the core network_A 90 and the WLAN ANa 70. The WLAN APa 72 and the TWAG_A 74 may be configured as a single device.

Even in a case that the operator running the core network_A 90 and the operator running the WLAN ANa 70 are different, such a configuration can be implemented through contracts and agreements between the operators.

Furthermore, the WLAN ANb 75 is configured to include a WLAN APb 76. The WLAN APb 76 is a radio base station to which the UE_A 10 connects in the WLAN access system in a case that no trusting relationship is established with the operator running the core network_A 90, and the WLAN ANb 75 may include one or multiple radio base stations.

In this manner, the WLAN ANb 75 is connected to the core network_A 90 via the ePDG_A 65, which is a device included in the core network_A 90, serving as a gateway. The ePDG_A 65 has a security function for ensuring security.

The UTRAN_A 20 is configured to include a Radio Network Controller (RNC)_A 24 and an eNB (UTRAN)_A 22. The eNB (UTRAN)_A 22 is a radio base station to which the UE_A 10 connects through a UMTS Terrestrial Radio Access (UTRA), and the UTRAN_A 20 may include one or multiple radio base stations. Furthermore, the RNC_A 24 is a control unit configured to connect the core network_A 90 and the eNB (UTRAN)_A 22, and the UTRAN_A 20 may include one or multiple RNCs. Moreover, the RNC_A 24 may be connected to one or multiple eNBs (UTRANs)_A 22. In addition, the RNC_A 24 may be connected to a radio base station (Base Station Subsystem (BSS)_A 26) included in the GERAN_A 25.

The GERAN_A 25 is configured to include a BSS_A 26. The BSS_A 26 is a radio base station to which the UE_A 10 connects through GSM (trade name)/EDGE Radio Access (GERA), and the GERAN_A 25 may be constituted of one or multiple radio base station BSSs. Furthermore, the multiple BSSs may be connected to each other. Moreover, the BSS_A 26 may be connected to the RNC_A 24.

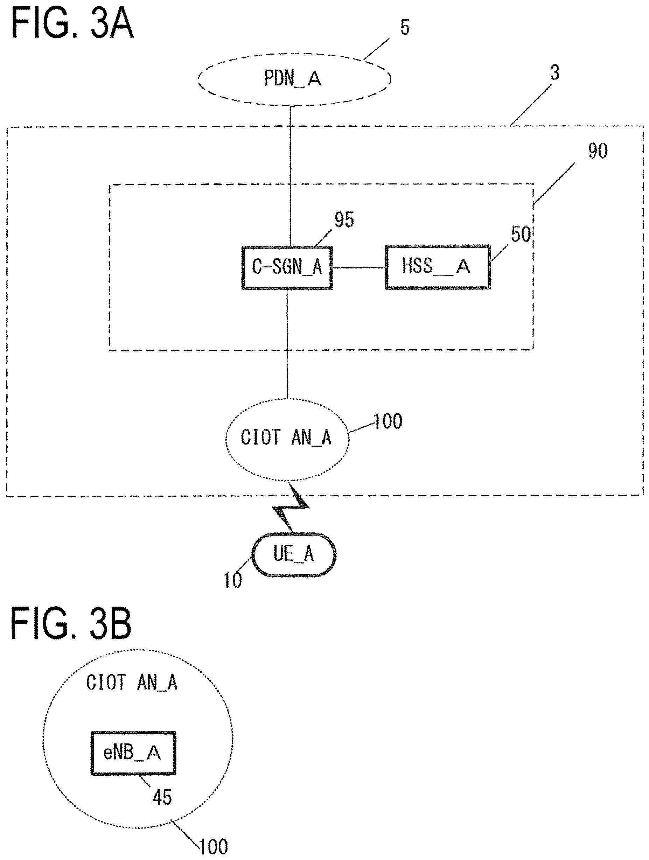

Next, a second example of a configuration of the core network_A 90 will be described. For example, in a case that the UE_A 10 is a CIoT terminal, the core network_A 90 may be configured as illustrated in FIGS. 3A and 3B. The core network_A 90 in FIGS. 3A and 3B includes a CIoT Serving Gateway Node (C-SGN)_A 95 and the HSS_A 50. Note that in the same manner as FIGS. 2A and 2B, in order for the core network_A 90 to provide connectivity to an access network other than LTE, the core network_A 90 may include the AAA_A 55 and/or the PCRF_A 60 and/or the ePDG_A 65 and/or SGSN_A 42.

The C-SGN_A 95 may be a node that incorporates some or all of the functions of the MME_A 40, the SGW_A 35, and the PGW_A 30 in FIGS. 2A and 2B. The C-SGN_A 95 may be a node for managing establishment and disconnection of connectivity of the CIoT terminal, mobility of the CIoT terminal, and the like.

In other words, the C-SGN_A 95 may have a gateway device function between the PDN_A and the core network_A 90, a gateway device function between the core network_A 90 and a CIOT AN_A 100, and a location management function of the UE_A 10.

As illustrated in the drawings, the UE_A 10 connects to the core network_A 90 through the radio access network CIOT AN_A 100.

FIG. 3B illustrates the configuration of the CIOT AN_A 100. As illustrated in the drawing, the CIOT AN_A 100 may be configured including the eNB_A 45. The eNB_A 45 included in the CIOT AN_A 100 may be the same base station as the eNB_A 45 included in the LTE AN_A 80. Alternatively, the eNB_A 45 included in the CIOT AN_A 100 may be a base station accommodating the CIoT terminal, which is different from the eNB_A 45 included in the LTE AN A 80.

Note that a first core network and/or a second core network may be constituted of a system that is optimized for the IoT.

Note that herein, the UE_A 10 being connected to radio access networks refers to the UE_A 10 being connected to a base station apparatus, an access point, or the like included in each of the radio access networks, and data, signals, and the like being transmitted and/or received also pass through those base station apparatuses, access points, or the like.

### 1.2. Device Configuration

The configuration of each apparatus will be described below.

### 1.2.1. eNB Configuration

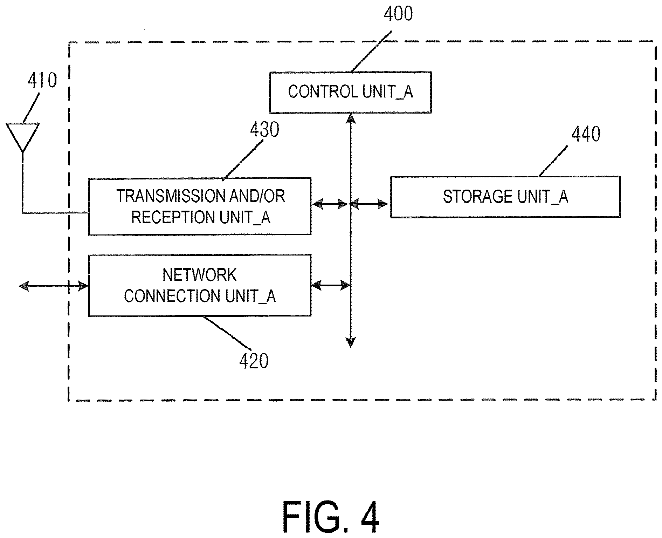

The configuration of the eNB_A 45 will be described below. FIG. 4 illustrates the device configuration of the eNB_A 45. As illustrated in FIG. 4, the eNB_A 45 includes a network connection unit_A 420, a transmission and/or reception unit_A 430, a control unit_A 400, and a storage unit_A 440. The network connection unit_A 420, the transmission and/or reception unit_A 430, and the storage unit_A 440 are connected to the control unit A 400 via a bus.

The control unit A 400 is a function unit for controlling the eNB_A 45. The control unit A 400 implements various processes by reading out various programs stored in the storage unit A 440 and performing the programs.

The network connection unit A 420 is a function unit through which the eNB_A 45 connects to the MME_A 40 and/or the SGW_A 35. Further, the network connection unit A 420 is a transmission and/or reception function unit with which the eNB_A 45 transmits and/or receives user data and/or control data to/from the MME_A 40 and/or the SGW_A 35.

The transmission and/or reception unit_A 430 is a function unit through which the eNB_A 45 connects to the UE_A 10. Further, the transmission and/or reception unit_A 430 is a transmission and/or reception function unit with which the user data and/or the control data is/are transmitted and/or received to/from the UE_A 10. Furthermore, an external antenna_A410 is connected to the transmission and/or reception unit_A 430.

The storage unit A 440 is a function unit for storing programs, data, and the like necessary for each operation of the eNB_A 45. A storage unit 640 is constituted of, for example, a semiconductor memory, a Hard Disk Drive (HDD), or the like.

The storage unit_A 440 may store at least identification information and/or control information and/or a flag and/or a parameter included in a control message transmitted and/or received in the communication procedure, which will be described later.

### 1.2.2. MME Configuration

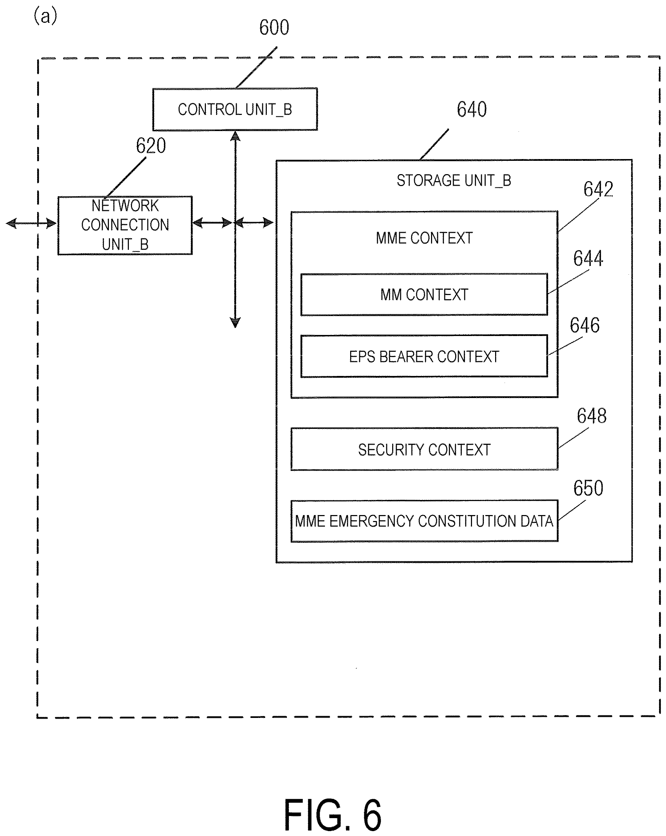

The configuration of the MMF_A 40 will be described below. FIG. 6(a) illustrates the device configuration of the MME_A 40. As illustrated in FIG. 6(a), the MME_A 40 includes a network connection unit_B 620, a control unit_B 600, and a storage unit_B 640. The network connection unit_B 620 and the storage unit_B 640 are connected to the control unit B 600 via a bus.

The control unit_B 600 is a function unit for controlling the MME_A 40. The control unit_B 600 implements various processes by reading out and performing various programs stored in the storage unit_B 640.

The network connection unit_B 620 is a function unit through which the MME_A 40 connects to the eNB_A 45 and/or the HSS_A 50 and/or the SGW_A 35. In addition, the network connection unit_B 620 is a transmission and/or reception function unit with which the MME_A 40 transmits and/or receives user data and/or control data to/from the eNB_A 45 and/or the HSS_A 50 and/or the SGW_A 35.

The storage unit_B 640 is a function unit for storing programs, data, and the like necessary for each operation of the MME_A 40. The storage unit_B 640 is constituted of, for example, a semiconductor memory, a Hard Disk Drive (HDD), or the like.

The storage unit_B 640 may store at least identification information and/or control information and/or a flag and/or a parameter included in the control message transmitted and/or received in the communication procedure, which will be described later.

As illustrated in FIG. 6(a), the storage unit_B 640 stores an MME context 642, a security context 648, and MME emergency configuration data 650. Note that the MME context includes an MM context 644 and an EPS bearer context 646. Alternatively, the MME context may include an EMM context and an ESM context. The MM context 644 may be the EMM context, the EPS bearer context 646 may be the ESM context.

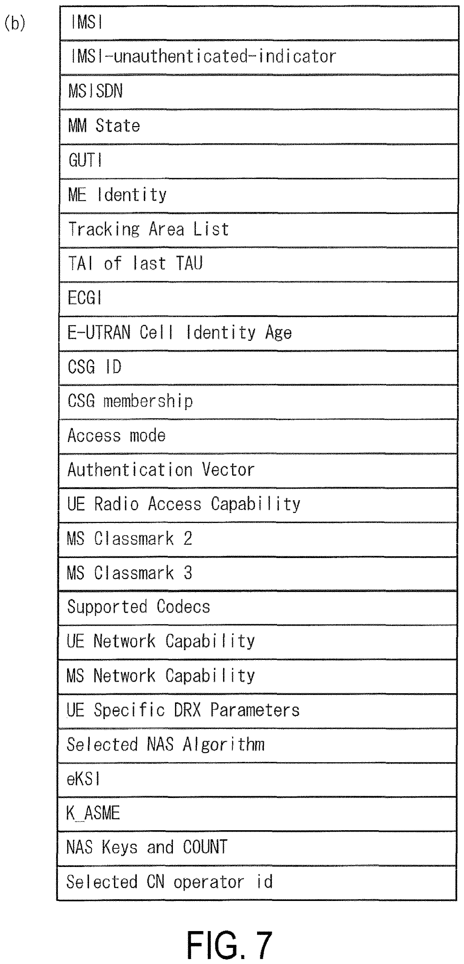

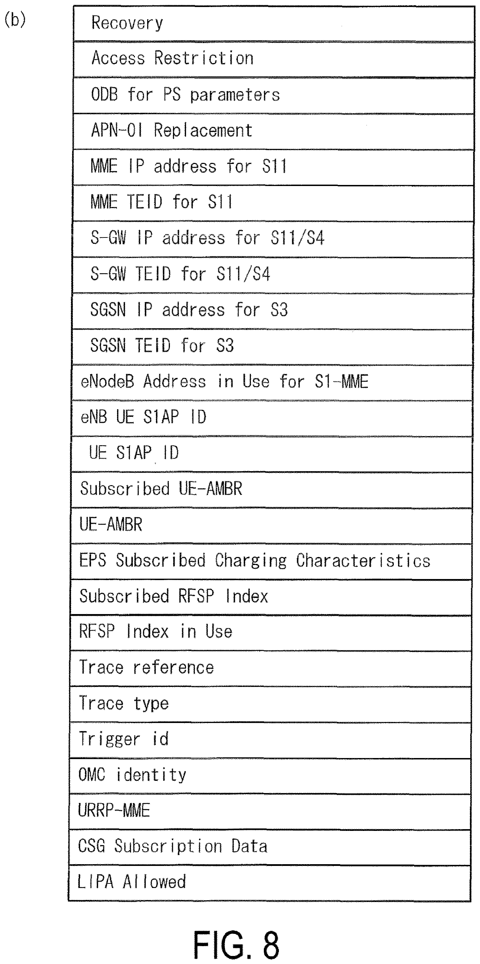

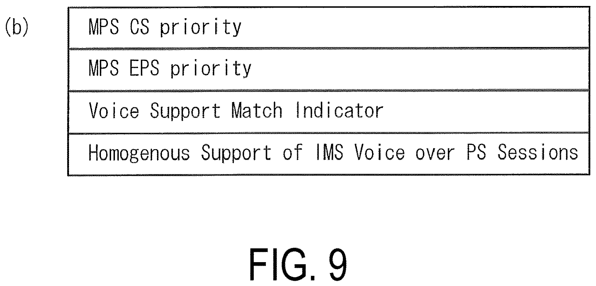

FIG. 7(b), FIG. 8(b), and FIG. 9(b) illustrate information elements of an MME context stored for each UE. As illustrated in the drawings, the MME context stored for each UE includes an IMSI, an IMSI-unauthenticated-indicator, an MSISDN, an MM State, a GUTI, an ME Identity, a Tracking Area List, a TAI of last TAU, an E-UTRAN Cell Global Identity (ECGI), an E-UTRAN Cell Identity Age, a CSG ID, a CSG membership, an Access mode, an Authentication Vector, a UE Radio Access Capability, MS Classmark 2, MS Classmark 3, Supported Codecs, a UE Network Capability, an MS Network Capability, UE Specific DRX Parameters, a Selected NAS Algorithm, an eKSI, a K_ASME, NAS Keys and COUNT, a Selected CN operator ID, a Recovery, an Access Restriction, an ODB for PS parameters, an APN-OI Replacement, an MME IP address for S11, an MME TEID for S11, an S-GW IP address for S11/S4, an S GW TEID for S11/S4, an SGSN IP address for S3, an SGSN TEID for S3, an eNodeB Address in Use for S1-MME, an eNB UE S1AP ID, an MME UE S1AP ID, a Subscribed UE-AMBR, a UE-AMBR, EPS Subscribed Charging Characteristics, a Subscribed RFSP Index, an RFSP Index in Use, a Trace reference, a Trace type, a Trigger ID, an OMC identity, a URRP-MME, CSG Subscription Data, a LIPA Allowed, a Subscribed Periodic RAU/TAU Timer, an MPS CS priority, an MPS EPS priority, a Voice Support Match Indicator, and a Homogenous Support of IMS Voice over PS Sessions.

The MME context for each UE may include information identifying a communication path to be an efficient path.

The IMSI is permanent identification information of a user. The IMSI is identical to the IMSI stored in the HSS_A 50.

The IMSI-unauthenticated-indicator is instruction information indicating that this IMSI is not authenticated.

MSISDN represents the phone number of UE. The MSISDN is indicated by the storage unit of the HSS_A 50.

The MM State indicates a mobility management state of the MME. This management information indicates an ECM-IDLE state in which a connection between the eNB and the core network is released, an ECM-CONNECTED state in which the connection between the eNB and the core network is not released, or an EMM-DEREGISTERED state in which the MME does not store the location information of the UE.

The Globally Unique Temporary Identity (GUTI) is temporary identification information about the UE. The GUTI includes the identification information about the MME (Globally Unique MME Identifier (GUMMEI)) and the identification information about the UE in a specific MME (M-TMSI).

The ME Identity is an ID of the UE, and may be the IMEI/IMISV, for example.

The Tracking Area List is a list of the tracking area identification information which is assigned to the UE.

The TAI of last TAU is the tracking area identification information indicated by a recent tracking area update procedure.

The ECGI is cell identification information of the recent UE known by the MME_A 40.

The E-UTRAN Cell Identity Age indicates the elapsed time since the MME acquires the ECGI.

The CSG ID is identification information of a Closed Subscriber Group (CSG), in which the UE recently operates, known by the MME.

The CSG membership is member information of the CSG of the recent UE known by the MME. The CSG membership indicates whether the UE is the CSG member.

The Access mode is an access mode of a cell identified by the ECGI, may be identification information indicating that the ECGI is a hybrid which allows access to both the UEs which is the CSG and is not the CSG.

The Authentication Vector indicates a temporary Authentication and Key Agreement (AKA) of a specific UE followed by the MME. The Authentication Vector includes a random value RAND used for authentication, an expectation response XRES, a key K_ASME, and a language (token) AUTN authenticated by the network.

The UE Radio Access Capability is identification information indicating a radio access capability of the UE.

MS Classmark 2 is a classification symbol (Classmark) of a core network of a CS domain of 3G/2G (UTRAN/GERAN). MS Classmark 2 is used in a case that the UE supports a Single Radio Voice Call Continuity (SRVCC) for the GERAN or the UTRAN.

MS Classmark 3 is a classification symbol (Classmark) of a radio network of the CS domain of the GERAN. MS Classmark 3 is used in a case that the UE supports the Single Radio Voice Call Continuity (SRVCC) for the GERAN.

The Supported Codecs is a code list supported by the CS domain. This list is used in the case that the UE supports SRVCC for the GERAN or the UTRAN.

The UE Network Capability includes an algorithm of security supported by the UE and a key derivative function.

The MS Network Capability is information including at least one kind of information necessary for the SGSN to the UE having the GERAN and/or UTRAN function.

The UE Specific DRX Parameters are parameters used for determining a Discontinuous Reception (DRX) cycle length of the UE. Here, DRX is a function for changing the UE to a low-power-consumption mode in a case that there is no communication in a certain period of time, in order to reduce power consumption of a battery of the UE as much as possible.

The Selected NAS Algorithm is a selected security algorithm of a Non-Access Stratum (NAS).

The eKSI is a key set indicating the K_ASME. The eKSI may indicate whether to use a security key acquired by a security authentication of the UTRAN or the E-UTRAN.

The K ASME is a key for E-UTRAN key hierarchy generated based on a Cipher Key (CK) and an Integrity Key (IK).

The NAS Keys and COUNT includes a key K_NASint, a key K_NASenc, and a NAS COUNT parameter. The key K_NASint is a key for encryption between the UE and the MME, the key K_NASenc is a key for security protection between the UE and the MME. Additionally, the NAS COUNT is a count which starts a count in a case that a new key by which security between the UE and the MME is established is configured.

The Selected CN operator ID is identification information, which is used for sharing the network among operators, of a selected core network operator.

The Recovery is identification information indicating whether the HSS performs database recovery.

The Access Restriction is registration information for access restriction.

The ODB for PS parameters indicates a state of an operator determined barring (ODB). Here, ODB is an access rule determined by the network operator (operator).

The APN-OI Replacement is a domain name substituting for APN when PGW FQDN is constructed in order to perform a DNS resolution. This substitute domain name is applied to all APNs.

The MME IP address for S11 is an IP address of the MME used for an interface with the SGW.

The MME TEID for S11 is a Tunnel Endpoint Identifier (TEID) used for the interface with the SGW.

The S-GW IP address for S11/S4 is an IP address of the SGW used for an interface between the MME and the SGW or between the SGSN and the MME.

The S GW TEID for S11/S4 is a TEID of the SGW used for the interface between the MME and the SGW or between the SGSN and the MME.

The SGSN IP address for S3 is an IP address of the SGSN used for the interface between the MME and the SGSN.

The SGSN TEID for S3 is a TEID of the SGSN used for the interface between the MME and the SGSN.

The eNodeB Address in Use for S1-MME is an IP address of the eNB recently used for an interface between the MME and the eNB.

The eNB UE S1AP ID is identification information of the UE in the eNB.

The MME UE S1AP ID is identification information of the UE in the MME.

The Subscribed UE-AMBR indicates the maximum value of a Maximum Bit Rate (MBR) of uplink communication and downlink communication for sharing all Non-Guaranteed Bit Rate (GBR) bearers (non-guaranteed bearers) in accordance with user registration information.

The UE-AMBR indicates the maximum value of the MBR of the uplink communication and the downlink communication which are recently used for sharing all the Non-GBR bearers (non-guaranteed bearers).

The EPS Subscribed Charging Characteristics indicate a charging performance of the UE. For example, the EPS Subscribed Charging Characteristics may indicate registration information such as normal, prepaid, a flat rate, hot billing, or the like.

The Subscribed RFSP Index is an index for a specific RRM configuration in the E-UTRAN acquired from the HSS.

The RFSP Index in Use is an index for the specific RRM configuration in the E-UTRAN which is recently used.

The Trace reference is identification information for identifying a specific trace record or a record set.

The Trace type indicates a type of the trace. For example, the Trace type may indicate a type traced by the HSS and/or a type traced by the MME, the SGW, or the PGW.

The Trigger ID is identification information for identifying a constituent element for which the trace starts.

The OMC Identity is identification information for identifying the OMC which receives the record of the trace.

The URRP-MME is identification information indicating that the HSS requests UE activity notification from the MME.

The CSG Subscription Data are a relevant list of a PLMN (VPLMN) CSG ID of a roaming destination and an equivalent PLMN of the roaming destination. The CSG Subscription Data may be associated with an expiration date indicating an expiration date of the CSG ID and an absent expiration date indicating that there is no expiration date for each CSG ID. The CSG ID may be used for a specific PDN connection through LIPA.

The LIPA Allowed indicates whether the UE is allowed to use the LIPA in this PLMN, and the Subscribed Periodic RAU/TAU Timer is a timer of a periodic RAU and/or TAU.

The MPS CS priority indicates that the UE is registered in eMLPP or a 1x RTT priority service in the CS domain.

The MPS EPS priority is identification information indicating that the UE is registered in MPS in the EPS domain.

The Voice Support Match Indicator indicates whether a radio capability of the UE is compatible with the network configuration. For example, the Voice Support Match Indicator indicates whether the SRVCC support by the UE matches the support for voice call by the network.

The Homogenous Support of IMS Voice over PS Sessions for MME is instruction information indicating, for each UE, whether an IMS voice call on a PS session is supported. The Homogenous Support of IMS Voice over PS Sessions for MME includes "Supported" in which an IP Multimedia Subsystem (IMS) voice call on a Packet Switched (PS: line switching) session in all the Tracking Areas (TAs) managed by the MME is supported, and "Not Supported" indicating a case where there is no TA in which the IMS voice call on the PS session is supported. Additionally, the MME does not notify the HSS of this instruction information, in a case that the IMS voice call on the PS session is not uniformly supported (the TA in which the support is performed and the TA in which the support is not performed are both present in the MME), and in a case that it is not clear whether to be supported.

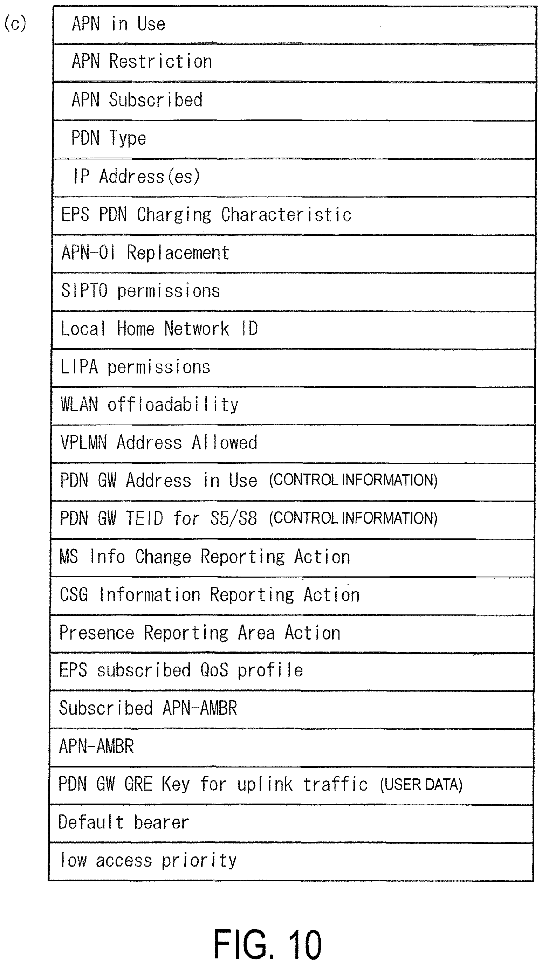

FIG. 10(c) illustrates information elements included in the MME context for each PDN connection stored for each PDN connection. As illustrated in the drawing, the MME context for each PDN connection includes an APN in Use, an APN Restriction, an APN Subscribed, a PDN Type, an IP Address, EPS PDN Charging Characteristics, an APN-OI Replacement, SIPTO permissions, a Local Home Network ID, LIPA permissions, a WLAN offloadability, a VPLMN Address Allowed, a PDN GW Address in Use (control information), a PDN GW TEID for S5/S8 (control information), an MS Info Change Reporting Action, a CSG Information Reporting Action, a Presence Reporting Area Action, an EPS subscribed QoS profile, a Subscribed APN-AMBR, an APN-AMBR, a PDN GW GRE Key for uplink traffic (user data), a Default bearer, and a low access priority.

The MME context for each PDN connection may include information identifying a communication path to be an efficient path.

The APN in Use indicates APN which is recently used. This APN includes identification information about the APN network and identification information about a default operator.

The APN Restriction indicates a restriction on a combination of an APN type to APN associated with this bearer context. In other words, the APN Restriction is information for restricting the number and types of APNs which can be established.

The APN Subscribed refers to a registration APN received from the HSS.

The PDN Type indicates the type of the IP address. The PDN Type indicates IPv4, IPv6, or IPv4v6, for example.

The IP Address indicates an IPv4 address or an IPv6 Prefix. Note that the IP address may store both the IPv4 and IPv6 prefixes.

The EPS PDN Charging Characteristics indicate a charging performance. The EPS PDN Charging Characteristics may indicate, for example, normal, prepaid, a flat rate, or hot billing.

The APN-OI Replacement is a proxy domain name of APN having the same role as that of the APN-OI Replacement, registered for each UE. Note that the APN-OI Replacement has a higher priority than that of the APN-OI Replacement for each UE.

The SIPTO permissions indicate permission information to a Selected IP Traffic Offload (SIPTO) of traffic using this APN. Specifically, the SIPTO permissions identify a prohibition of the use of SIPTO, permission of the use of SIPTO in the network excluding the local network, permission of the use of SIPTO in the network including the local network, or permission of the use of SIPTO only in the local network.

The Local Home Network ID indicates identification information of a home network to which the base station belongs, in a case that SIPTO (SIPTO@LN) using the local network can be used.

The LIPA permissions are identification information indicating whether this PDN can access through LIPA. Specifically, the LIPA permissions may be an LIPA-prohibited which does not permit LIPA, an LIPA-only which permits only LIPA, or an LIPA-conditional which permits LIPA depending on a condition.

The WLAN offload ability is identification information indicating whether traffic connected through this APN can perform offload to the wireless LAN by utilizing a cooperative function between the wireless LAN and 3GPP, or maintains the 3GPP connection. The WLAN offload ability may vary for each RAT type. Specifically, different WLAN offload abilities may be present for LTE (E-UTRA) and 3G (UTRA).

The VPLMN Address Allowed indicates whether a connection in which the UE uses this APN is allowed to use only an HPLMN domain (IP address) PGW in PLMN (VPLMN) of the roaming destination or allowed to use additionally the PGW in the VPLMN domain. The PDN GW Address in Use (control information) indicates the current IP address of the PGW. This address is used when a control signal is transmitted.

The PDN GW TEID for S5/S8 (control information) is a TEID used for transmission and/or reception of the control information in an interface (S5/S8) between the SGW and the PGW.

The MS Info Change Reporting Action is an information element indicating that it is necessary to notify the PGW of user location information being changed.

The CSG Information Reporting Action is an information element indicating that it is necessary to notify the PGW of CSG information being changed.

The Presence Reporting Area Action indicates necessity of notification of the change as to whether the UE is present in a Presence Reporting Area. This information element separates into identification information of the presence reporting area and an element included in the presence reporting area.

The EPS subscribed QoS profile indicates a QoS parameter to a default bearer at a bearer level.

The Subscribed APN-AMBR indicates the maximum value of the Maximum Bit Rate (MBR) of the uplink communication and the downlink communication for sharing all the Non-GBR bearers (non-guaranteed bearers) established for this APN in accordance with the user registration information.

The APN-AMBR indicates the maximum value of the Maximum Bit Rate (MBR) of the uplink communication and the downlink communication for sharing all the Non-GBR bearers (non-guaranteed bearers) established for this APN, which has been determined by the PGW.

The PDN GW GRE Key for uplink traffic (user data) is a Generic Routing Encapsulation (GRE) key for the uplink communication of the user data of the interface between the SGW and the PGW.

The Default Bearer is information that is acquired and/or generated when the PDN connection is established, and is EPS bearer identification information for identifying a default bearer associated with the PDN connection.

Note that the EPS bearer in the present embodiment may be a communication path that is established between the UE_A 10 and the C-SGN_A 95. In addition, the EPS bearer may include a Radio Bearer (RB) established between the UE_A 10 and the eNB_A 45 and an S1 bearer established between the eNB_A 45 and the C-SGN_A 95. Here, the RB and the EPS bearer may be associated with each other on a one-to-one basis. Accordingly, identification information of the RB may be associated with identification information of the EPS bearer on a one-to-one basis, or may be the same as the identification information of the EPS bearer.

The EPS bearer may be a logical communication path that is established between the UE_A 10 and the PGW_A 30. In this case as well, the EPS bearer may include a Radio Bearer (RB) established between the UE_A 10 and the eNB_A 45. In addition, the RB and the EPS bearer may be associated with each other on a one-to-one basis. Accordingly, identification information of the RB may be associated with identification information of the EPS bearer on a one-to-one basis, or may be the same as the identification information of the EPS bearer.

Therefore, the Default Bearer may be identification information for identifying a Signalling Radio Bearer (SRB) and/or a Control Signalling Radio Bearer (CRB), or may be identification information for identifying a Data Radio Bearer (DRB).

Here, the SRB in the present embodiment may be RB that is originally established for transmission and/or reception of control information such as a control message. Here, the CRB in the present embodiment may be RB that is originally established for transmission and/or reception of control information such as a control message. Note that in the present embodiment, RB that originally serves to transmit and/or receive a control message is used to transmit and/or receive user data. Therefore, in the present embodiment, the SRB or the CRB is used to transmit and/or receive a control message and user data.

Moreover, the DRB in the present embodiment may be a RB that is established for transmission and/or reception of user data.

The low access priority indicates that the UE requests a low access priority, when the PDN connection is opened.

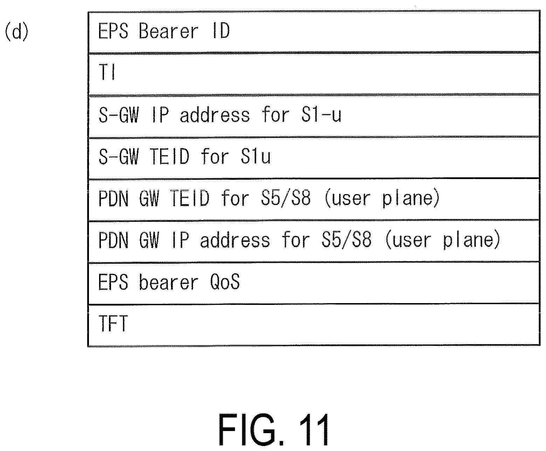

FIG. 11(d) illustrates the MME context stored for each bearer. As illustrated in FIG. 11(d), the MME context stored for each bearer includes an EPS Bearer ID, a TI, an S-GW IP address for S1-u, an S-GW TEID for S1u, a PDN GW TEID for S5/S8, a PDN GW IP address for S5/S8, an EPS bearer QoS, and a TFT.

The MME context for each bearer may include information identifying a communication path to be an efficient path.

The EPS Bearer ID is the only identification information for identifying the EPS bearer for a UE connection via the E-UTRAN.

Note that the EPS Bearer ID may be EPS bearer identification information for identifying a dedicated bearer. Therefore, the EPS bearer ID may be identification information for identifying an EPS bearer that is different from the default bearer.

Note that, as has already been described, the EPS bearer may be a communication path that is established between the UE_A 10 and the C-SGN_A 95. In addition, the EPS bearer may include a Radio Bearer (RB) established between the UE_A 10 and the eNB_A 45 and an S1 bearer established between the eNB_A 45 and the C-SGN_A 95. Here, the RB and the EPS bearer may be associated with each other on a one-to-one basis. Accordingly, identification information of the RB may be associated with identification information of the EPS bearer on a one-to-one basis, or may be the same as the identification information of the EPS bearer.

The EPS bearer may be a logical communication path that is established between the UE_A 10 and the PGW_A 30. In this case as well, the EPS bearer may include a Radio Bearer (RB) established between the UE_A 10 and the eNB_A 45. In addition, the RB and the EPS bearer may be associated with each other on a one-to-one basis. Accordingly, identification information of the RB may be associated with identification information of the EPS bearer on a one-to-one basis, or may be the same as the identification information of the EPS bearer.

Therefore, an EPS bearer ID for identifying the dedicated bearer may be identification information for identifying a Signalling Radio Bearer (SRB) and/or a Control Signalling Radio Bearer (CRB), or may be identification information for identifying a Data Radio Bearer (DRB).

Here, as has already been described, the SRB in the present embodiment may be RB that is originally established for transmission and/or reception of control information such as a control message. Here, the CRB in the present embodiment may be RB that is originally established for transmission and/or reception of control information such as a control message. Note that in the present embodiment, RB that originally serves to transmit and/or receive a control message is used to transmit and/or receive user data. Therefore, in the present embodiment, the SRB or the CRB is used to transmit and/or receive a control message and user data.

Moreover, the DRB in the present embodiment may be a RB that is established for transmission and/or reception of user data.

The TI is an abbreviation of a "Transaction Identifier", and is identification information identifying a bidirectional message flow (Transaction).

The S-GW IP address for S1-u is an IP address of the SGW used for an interface between the eNB and the SGW.

In a case that the user data is transmitted and/or received while being included in a message for control information, the S-GW IP address for S1-u may be an IP address of the SGW used for an interface between the MME and/or the SGSN and the SGW, or may be the S-GW IP address for S11/S4.

The S-GW TEID for S1u is a TEID of the SGW used for the interface between the eNB and the SGW.

In a case that the MME and/or the user data is/are transmitted and/or received while being included in a message for control information, the S-GW TEID for S1u may be a TEID address of the SGW used for an interface between the SGSN and the SGW, or may be S-GW TEID for S11/S4.

The PDN GW TEID for S5/S8 is a TEID of the PGW for user data transmission in the interface between the SGW and the PGW.

The PDN GW IP address for S5/S8 is an IP address of the PGW for user data transmission in the interface between the SGW and the PGW.

The EPS bearer QoS includes a QoS Class Identifier (QCI) and an Allocation and Retention Priority (ARP). QCI indicates a class to which the QoS belongs. QoS can be classified in accordance with presence or absence of band control, an allowable delay time, a packet loss rate, or the like. The QCI includes information indicating the priority. ARP is information representing a priority relating to maintaining the bearer.

The TFT is an abbreviation of a "Traffic Flow Template", and indicates all packet filters associated with the EPS bearer.

Here, the information elements included in the MME context illustrated in FIG. 7(b) to FIG. 11(d) are included in either the MM context 644 or the EPS bearer context 646. For example, the MME context for each bearer illustrated in FIG. 11(d) may be stored in the EPS bearer context, and the other information elements may be stored in the MM context. Alternatively, the MME context for each PDN connection illustrated in FIG. 10(c) and the MME context for each bearer illustrated in FIG. 11(d) may be stored in the EPS bearer context, and the other information elements may be stored in the MM context.

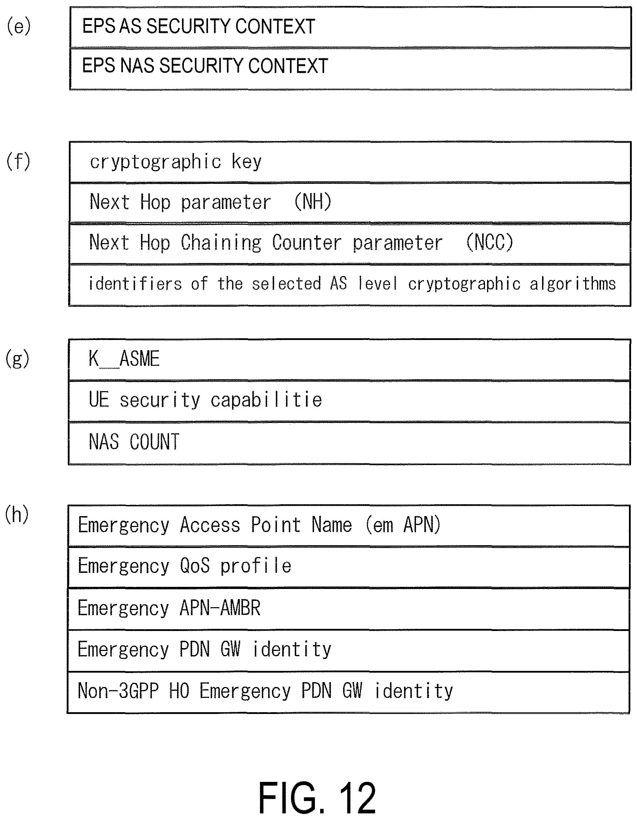

As illustrated in FIG. 6(a), the storage unit_B 640 of the MME may store the security context 648. FIG. 12(e) illustrates information elements included in the security context 648.

As illustrated in FIG. 12(e), the security context includes an EPS AS security context and an EPS NAS security context. The EPS AS security context is a context relating to security of an Access Stratum (AS), and the EPS NAS security context is a context relating to security of a Non-Access Stratum (NAS).

FIG. 12(f) illustrates information elements included in the EPS AS security context. As illustrated in FIG. 12(f), the EPS AS security context includes a cryptographic key, a Next Hop parameter (NH), a Next Hop Chaining Counter parameter (NCC), and identifiers of the selected AS level cryptographic algorithms.

The cryptographic key is an encryption key in an access stratum.

The NH is an information element determined from the K_ASME. The NH is an information element for enabling a forward security.

The NCC is an information element associated with the NH. The NCC represents the number of occurrences of handovers in a vertical direction changing the network.

The identifiers of the selected AS level cryptographic algorithms are identification information of a selected encryption algorithm.

FIG. 12(g) illustrates information elements included in the EPS NAS security context. As illustrated in FIG. 12(g), the EPS NAS security context may include the K_ASME, UE Security capabilities, and the NAS COUNT.

The K ASME is a key for E-UTRAN key hierarchy generated based on the keys CK and IK.

The UE Security capabilities is a set of identification information corresponding to a cipher and an algorithm used by the UE. This information includes information for the access stratum and information for the non-access stratum. Furthermore, in a case that the UE supports access to the UTRAN/GERAN, this information includes information for the UTRAN/GERAN.

The NAS COUN is a counter indicating the time during which the K ASME is operating.

The security context 648 may be included in the MME context 642. As illustrated in FIG. 6(a), the security context 648 and the MME context 642 may be separately present.

FIG. 12(h) illustrates information elements stored in the MME emergency configuration data 650. The MME emergency configuration data are information which is used instead of registration information of the UE acquired from the HSS. As illustrated in FIG. 12(h), the MME emergency configuration data 650 include an Emergency Access Point Name (em APN), an Emergency QoS profile, an Emergency APN-AMBR, an Emergency PDN GW identity, and a Non-3GPP HO Emergency PDN GW identity.

The em APN indicates an access point name used for the PDN connection for emergency.

The Emergency QoS profile indicates QoS of the default bearer of em APN at a bearer level.

The Emergency APN-AMBR indicates the maximum value of the MBR of the uplink communication and the downlink communication for sharing the Non-GBR bearers (non-guaranteed bearers) established for em APN. This value is determined by the PGW.

The Emergency PDN GW identity is identification information of the PGW statically configured to em APN. This identification information may be an FQDN or an IP address.

The Non-3GPP HO Emergency PDN GW identity is identification information of the PGW statically configured to em APN, in a case that the PLMN supports a handover to an access network other than 3GPP. This identification information may be an FQDN or an IP address.

Furthermore, the MME_A 40 may manage a connection state with respect to the UE while synchronizing with the UE.

### 1.2.3. SGW Configuration

The SGW in the present embodiment may include SGW__A35 and SGW_B36.

The configuration of the SGW_B36 may be similar to the configuration of SGW_A35.

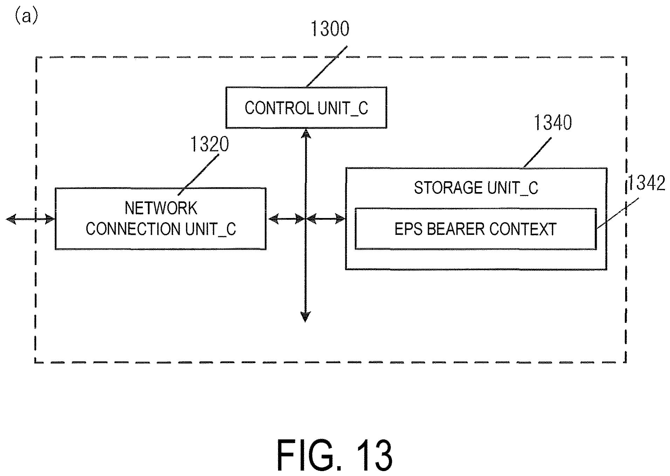

Hence, hereinafter, the configuration of the SGW_A 35 will be described. FIG. 13(a) illustrates the device configuration of the SGW_A 35. As illustrated in FIG. 13(a), the SGW_A 35 includes a network connection unit_C 1320, a control unit_C 1300, and a storage unit_C 1340. The network connection unit_C 1320 and the storage unit C 1340 are connected to the control unit C 1300 via a bus.

The control unit_C 1300 is a function unit for controlling the SGW_A 35. The control unit_C 1300 implements various processes by reading out and performing various programs stored in the storage unit_C 1340.

The network connection unit_C 1320 is a function unit through which the SGW_A 35 connects to the eNB_A 45 and/or the MME_A 40 and/or the PGW_A 30 and/or SGSN_A 42. In addition, the network connection unit C 1320 is a transmission and/or reception function unit with which the SGW_A 35 transmits and/or receives user data and/or control data to/from the eNB_A 45 and/or the MME_A 40 and/or the PGW_A 30 and/or SGSN_A 42.

The storage unit_C 1340 is a function unit for storing programs, data, and the like necessary for each operation of the SGW_A 35. The storage unit_C 1340 is constituted of, for example, a semiconductor memory, a Hard Disk Drive (HDD), or the like.

The storage unit_C 1340 may store at least the identification information and/or the control information and/or the flag and/or the parameter included in the control message transmitted and/or received in the communication procedure, which will be described later.

As illustrated in drawing, the storage unit_C 1340 stores an EPS bearer context 1342. Note that the EPS bearer context includes an EPS bearer context stored for each UE, an EPS bearer context stored for each PDN, and an EPS bearer context stored for each bearer.

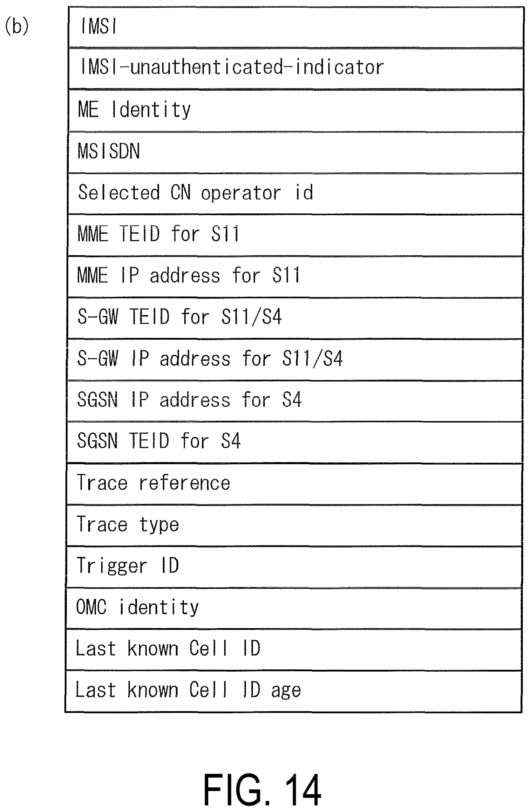

FIG. 14(b) illustrates information elements of the EPS bearer context stored for each UE. As illustrated in FIG. 14(b), the EPS bearer context stored for each UE includes an IMSI, an MSI-unauthenticated-indicator, an ME Identity, an MSISDN, a Selected CN operator id, an MME TEID for S11, an MME IP address for S11, an S-GW TEID for S11/S4, an S-GW IP address for S11/S4, an SGSN IP address for S4, an SGSN TEID for S4, a Trace reference, a Trace type, a Trigger ID, an OMC identity, a Last known Cell Id, and a Last known Cell Id age.

The EPS bearer context for each UE may include information identifying a communication path to be an efficient path.

The IMSI is permanent identification information of a user. The IMSI is identical to the IMSI in the HSS_A 50.

The IMSI-unauthenticated-indicator is instruction information indicating that this IMSI is not authenticated.

The ME Identity is identification information of the UE, and may be the IMEI/IMISV, for example.

The MSISDN represents a basic phone number of the UE. The MSISDN is indicated by the storage unit of the HSS_A 50.

The Selected CN operator id is identification information, which is used for sharing the network among operators, of a selected core network operator.

The MME TEID for S11 is a TEID of the MME used for the interface between the MME and the SGW.

The MME IP address for S11 is an IP address of the MME used for the interface between the MME and the SGW.

The S-GW TEID for S11/S4 is a TEID of the SGW used for the interface between the MME and the SGW, or the interface between the SGSN and the SGW.

The S-GW IP address for S11/S4 is an IP address of the SGW used for the interface between the MME and the SGW, or the interface between the SGSN and the SGW.

The SGSN IP address for S4 is an IP address of the SGSN used for the interface between the SGSN and the SGW.

The SGSN TEID for S4 is a TEID of the SGSN used for the interface between the SGSN and the SGW.

The Trace reference is identification information for identifying a specific trace record or a record set.

The Trace Type indicates a type of the trace. For example, the Trace type may indicate a type traced by the HSS and/or a type traced by the MME, the SGW, or the PGW.

The Trigger ID is identification information for identifying a constituent element for which the trace starts.

The OMC Identity is identification information for identifying the OMC which receives the record of the trace.

The Last known Cell ID is recent location information of the UE notified by the network.

The Last known Cell ID age is information indicating the period from the time when the Last known Cell ID is stored to the present.

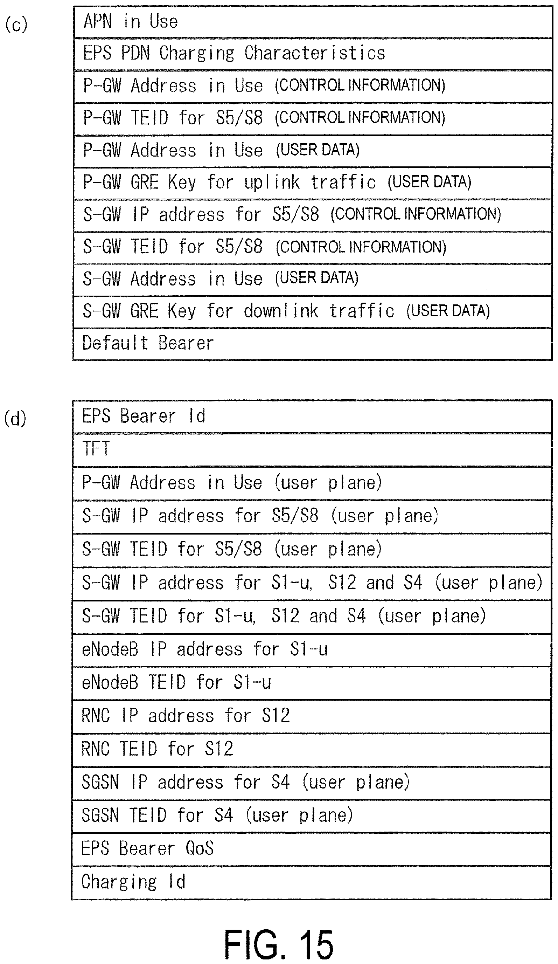

Furthermore, the EPS bearer context includes an EPS bearer context for each PDN connection stored for each PDN connection. FIG. 15(c) illustrates the EPS bearer context for each PDN connection. As illustrated in FIG. 15(c), the EPS bearer context for each PDN connection includes an APN in Use, EPS PDN Charging Characteristics, a P-GW Address in Use (control information), a P-GW TEID for S5/S8 (control information), a P-GW Address in Use (user data), a P-GW GRE Key for uplink (user data), an S-GW IP address for S5/S8 (control information), an S-GW TEID for S5/S8 (control information), an S GW Address in Use (user data), a S-GW GRE Key for downlink traffic (user data), and a Default Bearer.

The EPS bearer context for each PDN connection may include information identifying a communication path to be an efficient path.

The APN in Use indicates APN which is recently used. This APN includes identification information about the APN network and identification information about a default operator. Additionally, this information is information acquired from the MME or the SGSN.

The EPS PDN Charging Characteristics indicate a charging performance. The EPS PDN Charging Characteristics may indicate, for example, normal, prepaid, a flat rate, or hot billing.

The P-GW Address in Use (control information) is an IP address of the PGW used when the SGW recently transmits the control information.

The P-GW TEID for S5/S8 (control information) is a TEID of the PGW used for transmission of the control information in the interface between the SGW and the PGW.

The P-GW Address in Use (user data) is an IP address of the PGW used when the SGW recently transmits the user data.

The P-GW GRE Key for uplink (user data) is the GRE key for the uplink communication of the user data of the interface between the SGW and the PGW.

The S-GW IP address for S5/S8 (control information) is an IP address of the SGW used for the interface of the control information between the SGW and the PGW.

The S-GW TEID for S5/S8 (control information) is a TEID of the SGW used for the interface of the control information between the GW and the PGW.

The S GW Address in Use (user data) is an IP address of the SGW which is recently used when the SGW transmits the user data.

The S-GW GRE Key for downlink traffic (user data) is the GRE key of the uplink communication used for the interface of the user data between the SGW and the PGW.

The Default Bearer is information that is acquired and/or generated when the PDN connection is established, and is identification information for identifying a default bearer associated with the PDN connection.

Furthermore, the EPS bearer context of the SGW includes the EPS bearer context for each bearer. FIG. 15(d) illustrates the EPS bearer context for each bearer. As illustrated in FIG. 15(d), the EPS bearer context for each bearer includes an EPS Bearer Id, a TFT, a P-GW Address in Use (user data), a P-GW TEID for S5/S8 (user data), an S-GW IP address for S5/S8 (user data), an S-GW TEID for S5/S8 (user data), an S-GW IP address for S1-u, S12 and S4 (user data), an S-GW TEID for S1-u, S12 and S4 (user data), an eNodeB IP address for S1-u, an eNodeB TEID for S1-u, an RNC IP address for S12, an RNC TEID for S12, an SGSN IP address for S4 (user data), an SGSN TEID for S4 (user data), an EPS Bearer QoS, and a Charging Id.

The EPS context for each bearer may include information identifying a communication path to be an efficient path.

The EPS Bearer Id is the only identification information identifying the EPS bearer for the UE connection via the E-UTRAN. That is, the EPS Bearer Id is identification information for identifying the bearer. In other words, the EPS Bearer Id is identification information of the EPS bearer. The EPS Bearer Id may be identification information for identifying the SRB and/or the CRB, or may be identification information for identifying the DRB.

The TFT indicates all the packet filters associated with the EPS bearer. In other words, the TFT is information for identifying part of the user data transmitted and/or received, and the SGW_A 35 transmits and/or receives the user data identified by the TFT using the EPS bearer associated with the TFT. In further other words, the SGW_A 35 transmits and/or receives the user data identified by the TFT using the EPS bearer including the RB associated with the TFT.

Further, the SGW_A 35 may transmit and/or receive user data that cannot be identified with the TFT by using the default bearer.

Further, the SGW_A 35 may store in advance the TFT in association with the default bearer.

The P-GW Address in Use (user data) is an IP address of the PGW which is recently used for transmission of the user data in the interface between the SGW and the PGW.

The P-GW TEID for S5/S8 (user data) is a TEID of the PGW for the interface of the user data between the SGW and the PGW.

The S-GW IP address for S5/S8 (user data) is an IP address of the SGW for the user data received from the PGW.

The S-GW TEID for S5/S8 (user data) is a TEID of the SGW for the interface of the user data between the SGW and the PGW.

The S-GW IP address for S1-u, S12 and S4 (user data) is an IP address of the SGW used for the interface between the SGW and the 3GPP access network (the LTE access network or GERAN/UTRAN).

In a case that the user data is transmitted and/or received while being included in a message for control information, the S-GW IP address for S1-u, S12 and S4 (user data) may be an IP address of the SGW used for an interface between the SGW and the MME and/or the SGSN, or may be the S-GW IP address for S11/S4.

The S-GW TEID for S1-u, S12 and S4 (user data) is a TEID of the SGW used for the interface between the SGW and the 3GPP access network (the LTE access network or GERAN/UTRAN).

In the case that the user data is transmitted and/or received while being included in a message for control information, the S-GW TEID for S1-u, S12 and S4 (user data) may be a TEID of the SGW used for an interface between the SGW and the MME and/or the SGSN, or may be S-GW TEID for S11/S4.

The eNodeB IP address for S1-u is an IP address of the eNB used for transmission between the SGW and the eNB.

In the case that the user data is transmitted and/or received while being included in a message for control information, the eNodeB IP address for S1-u may be an IP address of the MME used for an interface between the MME and the SGW, or may be the MME IP address for S11.

The eNodeB TEID for S1-u is a TEID of the eNB used for the transmission between the SGW and the eNB.

In the case that the user data is transmitted and/or received while being included in a message for control information, the eNodeB TEID for S1-u may be a TEID of the MME used for an interface between the MME and the SGW, or may be the MME TEID for S11.

The RNC IP address for S12 is an IP address of the RNC used for the interface between the SGW and the UTRAN.

The RNC TEID for S12 is a TEID of the RNC used for the interface between the SGW and the UTRAN.

The SGSN IP address for S4 (user data) is an IP address of the SGSN used for transmission of the user data between the SGW and the SGSN.

The SGSN TEID for S4 (user data) is a TEID of the SGSN used for the transmission of the user data between the SGW and the SGSN.

The EPS Bearer QoS represents the QoS of this bearer, and may include an ARP, a GBR, an MBR, and a QCI. Here, the ARP is information representing the priority relating to maintaining the bearer. Additionally, the Guaranteed Bit Rate (GBR) represents a band guaranteed bit rate, and the Maximum Bit Rate (MBR) represents the maximum bit rate. The QCI can be classified in accordance with presence or absence of band control, an allowable delay time, a packet loss rate, or the like. The QCI includes information indicating the priority.

The Charging Id is identification information for recording charging generated in the SGW and the PGW.

### 1.2.4. PGW Configuration

The PGW in the present embodiment may include PGW_A 30 and PGW_B31.

The configuration of the PGW_B31 may be similar to the configuration of PGW A 30.

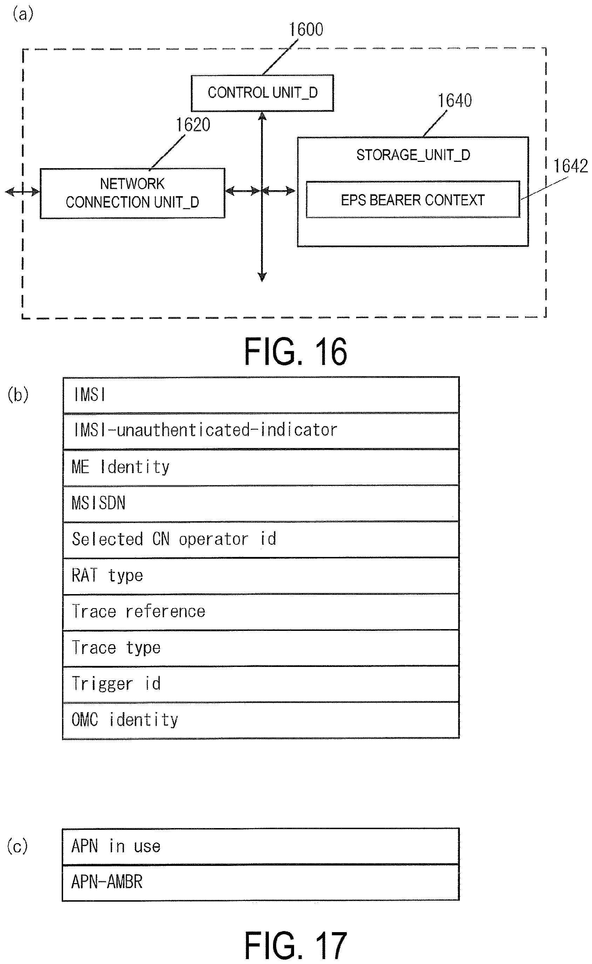

Thus, hereinafter, the configuration of the PGW_A 30 will be described. FIG. 16(a) illustrates the device configuration of the PGW_A 30. As illustrated in FIG. 16(a), the PGW_A 30 includes a network connection unit_D 1620, a control unit_D 1600, and a storage unit_D 1640. The network connection unit_D 1620 and the storage unit D 1640 are connected to the control unit D 1600 via a bus.

The control unit D 1600 is a function unit for controlling the PGW A 30. The control unit_D 1600 implements various processes by reading out and performing various programs stored in the storage unit_D 1640.

The network connection unit_D 1620 is a function unit through which the PGW_A 30 is connected to the SGW_A 35 and/or the PCRF_A 60 and/or the ePDG A 65 and/or the AAA_A 55 and/or the TWAG_A 74 and/or the PDN_A 5. In addition, the network connection unit_D 1620 is a transmission and/or reception function unit through which the PGW_A 30 transmits and/or receives user data and/or control data to/from the SGW_A 35 and/or the PCRF_A 60 and/or the ePDG_A 65 and/or the AAA_A 55 and/or the TWAG_A 74 and/or the PDN_A 5.

The storage unit_D 1640 is a function unit for storing programs, data, and the like necessary for each operation of the PGW_A 30. The storage unit_D 1640 is constituted of, for example, a semiconductor memory, a Hard Disk Drive (HDD), or the like.

The storage unit_D 1640 may store at least the identification information and/or the control information and/or the flag and/or the parameter included in the control message transmitted and/or received in the communication procedure, which will be described later.

As illustrated in FIG. 16(a), the storage unit_D 1640 stores an EPS bearer context 1642. Note that the EPS bearer context may be stored separately as an EPS bearer context stored for each UE, an EPS bearer context stored for each APN, an EPS bearer context stored for each PDN connection, and an EPS bearer context stored for each bearer.

FIG. 17(b) illustrates information elements included in the EPS bearer context stored for each UE. As illustrated in FIG. 17(b), the EPS bearer context stored for each UE includes an IMSI, an IMSI-unauthenticated-indicator, an ME Identity, an MSISDN, a Selected CN operator id, an RAT type, a Trace reference, a Trace type, a Trigger id, and an OMC identity.

The EPS bearer context for each UE may include information identifying a communication path to be an efficient path.

The IMSI is identification information to be assigned to a user using the UE.

The IMSI-unauthenticated-indicator is instruction information indicating that this IMSI is not authenticated.

The ME Identity is an ID of the UE, and may be the IMEI/IMISV, for example.

The MSISDN represents a basic phone number of the UE. The MSISDN is indicated by the storage unit of the HSS_A 50.

The Selected CN operator ID is identification information, which is used for sharing the network among operators, of a selected core network operator.

The RAT type indicates a recent Radio Access Technology (RAT) of the UE. The RAT type may be, for example, the E-UTRA (LTE), the UTRA, or the like.

The Trace reference is identification information for identifying a specific trace record or a record set.

The Trace type indicates a type of the trace. For example, the Trace type may indicate a type traced by the HSS and/or a type traced by the MME, the SGW, or the PGW.

The Trigger ID is identification information for identifying a constituent element for which the trace starts.

The OMC Identity is identification information for identifying the OMC which receives the record of the trace.

Next, FIG. 17(c) illustrates the EPS bearer context stored for each APN. As illustrated in the drawing, the EPS bearer context stored for each APN of the PGW storage unit includes an APN in use and an APN-AMBR.

The APN in Use indicates APN which is recently used. This APN includes identification information about the APN network and identification information about a default operator. This information is acquired from the SGW.

The APN-AMBR indicates the maximum value of the Maximum Bit Rate (MBR) of the uplink communication and the downlink communication for sharing all the Non-GBR bearers (non-guaranteed bearers) established for this APN.

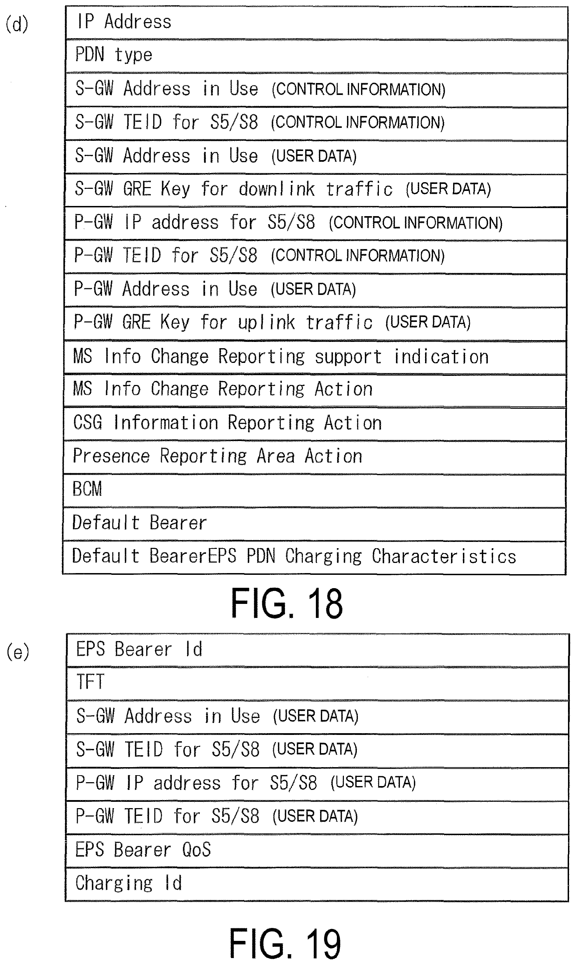

FIG. 18(d) illustrates the EPS bearer context for each PDN connection stored for each PDN connection. As illustrated in FIG. 18(d), the EPS bearer context for each PDN connection includes an IP Address, a PDN type, an S-GW Address in Use (control information), an S-GW TEID for S5/S8 (control information), an S-GW Address in Use (user data), an S-GW GRE Key for downlink traffic (user data), a P-GW IP address for S5/S8 (control information), a P-GW TEID for S5/S8 (control information), a P-GW Address in Use (user data), a P-GW GRE Key for uplink traffic (user data), an MS Info Change Reporting support indication, an MS Info Change Reporting Action, a CSG Information Reporting Action, a Presence Reporting Area Action, a BCM, a Default Bearer, and EPS PDN Charging Characteristics.

The EPS bearer context for each PDN connection may include information identifying a communication path to be an efficient path.

The IP Address indicates an IP address assigned to the UE for this PDN connection. The IP address may be an IPv4 and/or IPv6 prefix.

The PDN type indicates the type of the IP address. The PDN type indicates IPv4, IPv6 or IPv4v6, for example.

The S-GW Address in Use (control information) is an IP address of the SGW which is recently used for transmission of the control information.

The S-GW TEID for S5/S8 (control information) is a TEID of the SGW used for transmission and/or reception of the control information between the SGW and the PGW.

The S-GW Address in Use (user data) is an IP address of the SGW which is recently used for transmission of the user data in the interface between the SGW and the PGW.

The S-GW GRE Key for downlink traffic (user data) is the GRE key which is assigned to be used in the downlink communication of the user data from the PGW to the SGW at the interface between the SGW and the PGW.

The P-GW IP address for S5/S8 (control information) is an IP address of the PGW used for communication of the control information.

The P-GW TEID for S5/S8 (control information) is a TEID of the PGW for communication of the control information which uses the interface between the SGW and the PGW.

The P-GW Address in Use (user data) is an IP address of the PGW which is recently used for transmission of the user data which uses the interface between the SGW and the PGW.

The P-GW GRE Key for uplink traffic (user data) is the GRE key which is assigned for the uplink communication of the user data between the SGW and the PGW, that is, transmission of the user data from the SGW to the PGW.

The MS Info Change Reporting support indication indicates that the MME and/or the SGSN supports a notification process of user location information and/or user CSG information.

The MS Info Change Reporting Action is information indicating whether the MME and/or the SGSN is requested to transmit change in the user location information.

The CSG Information Reporting Action is information indicating whether the MME and/or the SGSN is requested to transmit change in the user CSG information. This information is separately indicated (a) for a CSG cell, (b) for a hybrid cell in which a user is a CSG member, (c) for a hybrid cell in which the user is not the CSG member, or for a combination thereof.

The Presence Reporting Area Action indicates necessity of notification of the change as to whether the UE is present in a Presence Reporting Area. This information element separates into identification information of the presence reporting area and an element included in the presence reporting area.

The Bearer Control Mode (BCM) indicates a control state of a bearer negotiated with respect to the GERAN/UTRAN.

The Default Bearer is information that is acquired and/or generated when the PDN connection is established, and is EPS bearer identification information for identifying a default bearer associated with the PDN connection.

The EPS PDN Charging Characteristics are a charging performance. The charging performance may indicate, for example, normal, prepaid, a flat rate, hot billing.

Furthermore, FIG. 19(e) illustrates the EPS bearer context stored for each EPS bearer. As illustrated in FIG. 19(e), the EPS bearer context includes an EPS Bearer Id, a TFT, an S-GW Address in Use (user data), an S-GW TEID for S5/S8 (user data), a P-GW IP address for S5/S8 (user data), a P-GW TEID for S5/S8 (user data), an EPS Bearer QoS, and a Charging Id.

The EPS context for each EPS bearer may include information identifying a communication path to be an efficient path.

The EPS Bearer Id is identification information identifying the access of the UE via the E-UTRAN. In other words, the EPS Bearer Id is identification information of the EPS bearer. In addition, the EPS Bearer Id may be identification information for identifying the SRB and/or the CRB, or may be identification information for identifying the DRB.

The TFT is an abbreviation of a "Traffic Flow Template", and indicates all packet filters associated with the EPS bearer. In other words, the TFT is information for identifying part of the user data transmitted and/or received, and the PGW_A 30 transmits and/or receives the user data identified by the TFT using the EPS bearer associated with the TFT. In further other words, the PGW_A 30 transmits and/or receives the user data identified by the TFT by using the EPS bearer including the RB associated with the TFT.

The PGW_A 30 may transmit and/or receive user data that cannot be identified with the TFT by using the default bearer.

The PGW_A 30 may store in advance the TFT in association with the default bearer.

The S-GW Address in Use (user data) is an IP address of the SGW which is recently used for transmission of the user data.

The S-GW TEID for S5/S8 (user data) is a TEID of the SGW for communication of the user data, which uses the interface between the SGW and the PGW.

The P-GW IP address for S5/S8 (user data) is an IP address of the PGW for the user data received from the PGW.

The P-GW TEID for S5/S8 (user data) is a TEID of the PGW for communication of the user data between the SGW and the PGW.

The EPS Bearer QoS indicates the QoS of the bearer, and may include an ARP, a GBR, an MBR, and a QCI. Here, the ARP is information representing the priority relating to maintaining the bearer. Additionally, the Guaranteed Bit Rate (GBR) represents a band guaranteed bit rate, and the Maximum Bit Rate (MBR) represents the maximum bit rate. The QCI can be classified in accordance with presence or absence of band control, an allowable delay time, a packet loss rate, or the like. The QCI includes information indicating the priority.

The Charging Id is charging identification information for identifying the record relating to charging generated in the SGW and the PGW.

1.2.5. UE Configuration

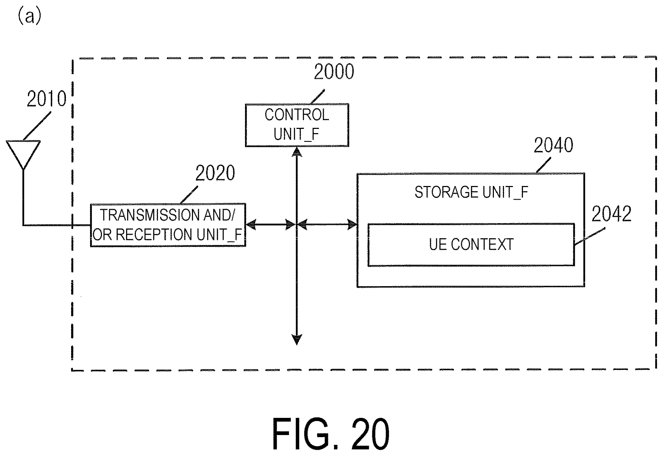

FIG. 20(a) illustrates a device configuration of the UE_A 10. As illustrated in FIG. 20(a), the UE_A 10 includes a transmission and/or reception unit_F 2020, a control unit_F 2000, and a storage unit_F 2040. The transmission and/or reception unit_F 2020 and the storage unit_F 2040 are connected to the control unit_F 2000 via a bus.

The control unit_F 2000 is a function unit for controlling the UE_A 10. The control unit_F 2000 implements various processes by reading out and performing various programs stored in the storage unit_F 2040.

The transmission and/or reception unit_F 2020 is a function unit through which the UE_A 10 connects to an IP access network via an LTE base station. Furthermore, an external antenna_F 2010 is connected to the transmission and/or reception unit_F 2020.

In other words, the transmission and/or reception unit_F 2020 is a function unit through which the UE_A 10 connects to the eNB_A 45. In addition, the transmission and/or reception unit_F 2020 is a transmission and/or reception function unit with which the UE_A 10 transmits and/or receives the user data and/or the control data to/from the eNB_A 45.

The storage unit_F 2040 is a function unit for storing programs, data, and the like necessary for each operation of the UE_A 10. The storage unit F 2040 is constituted of, for example, a semiconductor memory, a Hard Disk Drive (HDD), or the like.

The storage unit_F 2040 may store at least the identification information and/or the control information and/or the flag and/or the parameter included in the control message transmitted and/or received in the communication procedure, which will be described later.

As illustrated in FIG. 20(a), the storage unit_F 2040 stores a UE context 2042. Hereinafter, information elements stored in the storage unit_F 2040 will be described.

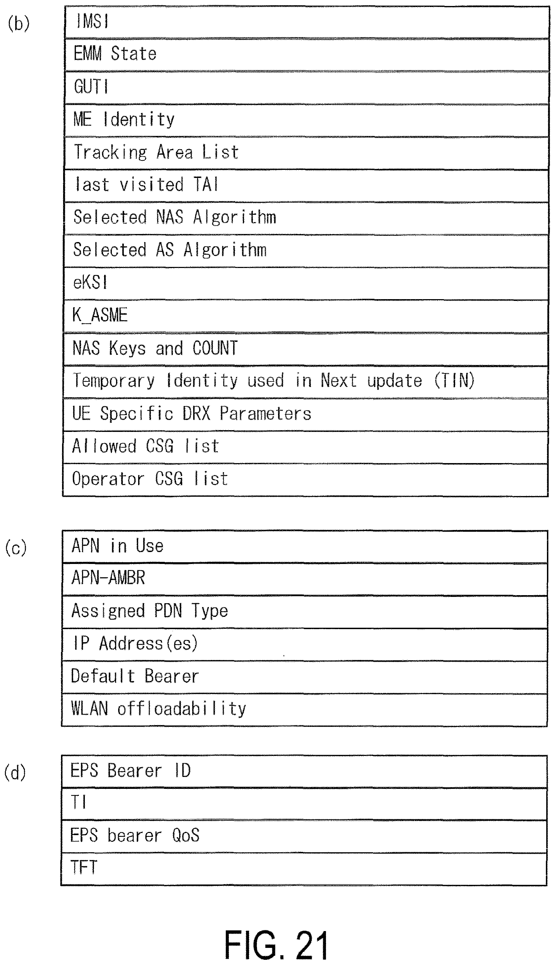

FIG. 21(b) illustrates information elements included in the UE context stored for each UE. As illustrated in FIG. 21(b), the UE context stored for each UE includes an IMSI, an EMM State, a GUTI, an ME Identity, a Tracking Area List, a last visited TAI, a Selected NAS Algorithm, a Selected AS Algorithm, an eKSI, K_ASME, NAS Keys and COUNT, a TIN, UE Specific DRX Parameters, an Allowed CSG list, and an Operator CSG list.

The UE context for each UE may include information identifying a communication path to be an efficient path.

The IMSI is permanent identification information of a subscriber.

The EMM State indicates a mobility management state of the UE. For example, the EMM State may be EMM-REGISTERED in which the UE is registered with the network (registered state) or EMM-DEREGISTERD in which the UE is not registered with the network (deregistered state).

GUTI is an abbreviation of "Globally Unique Temporary Identity", and is temporary identification information on the UE. The GUTI includes the identification information about the MME (Globally Unique MME Identifier (GUMMEI)) and the identification information about the UE in a specific MME (M-TMSI).

The ME Identity is an ID of an ME, and may be the IMEI/IMISV, for example.

The Tracking Area List is a list of the tracking area identification information which is assigned to the UE.

The last visited TAI is the tracking area identification information included in the Tracking Area List, and is identification information of the latest tracking area that the UE visits.

The Selected NAS Algorithm is a selected security algorithm of the NAS.

The Selected AS Algorithm is a selected security algorithm of the AS.

The eKSI is a key set indicating the K_ASME. The eKSI may indicate whether to use a security key acquired by a security authentication of the UTRAN or the E-UTRAN.

The K ASME is a key for E-UTRAN key hierarchy generated based on the keys CK and IK.

The NAS Keys and COUNT includes the key K_NASint, the key K_NASenc, and the NAS COUNT. The K_NASint is a key for encryption between the UE and the MME, the K_NASenc is a key for safety protection between the UE and the MME. Additionally, the NAS COUNT is a count which starts a count in a case that a new key by which security between the UE and the MME is established is configured.

The Temporary Identity used in Next update (TIN) is temporary identification information used in the UE in an attach procedure or a location information update procedure (RAU/TAU).

The UE Specific DRX Parameters are a Discontinuous Reception (DRX) cycle length of the selected UE.

The Allowed CSG list is a list of the PLMN associated with a CSG ID of a member to which the allowed UE belongs, under the control of both the user and the operator.

The Operator CSG list is a list of the PLMN associated with the CSG ID of a member to which the allowed UE belongs, under the control of only the operator.

Next, FIG. 21(c) illustrates the UE context for each PDN connection stored for each PDN connection. As illustrated in FIG. 21(c), the UE context for each PDN connection includes an APN in Use, an APN-AMBR, an Assigned PDN Type, an IP Address, a Default Bearer, and a WLAN offloadability.

The UE context for each PDN connection may include information identifying a communication path to be an efficient path.

The APN in Use is APN recently utilized. This APN may include identification information about the network and identification information about a default operator.

The APN-AMBR indicates the maximum value of the MBR of the uplink communication and the downlink communication for sharing the Non-GBR bearers (non-guaranteed bearers). The APN-AMBR is established for each APN.

The Assigned PDN Type is a type of the PDN assigned from the network. The Assigned PDN Type may be IPv4, IPv6, or IPv4v6, for example.

The IP Address is an IP address assigned to the UE, and may be an IPv4 address or an IPv6 prefix.

The Default Bearer is information that is acquired from the core network_A 90 when the PDN connection is established, and is EPS bearer identification information for identifying a default bearer associated with the PDN connection.

The WLAN offloadability is WLAN offload permission information indicating whether to allow for offload to the WLAN using an interworking function between the WLAN and the 3GPP, or maintain the 3GPP access.

FIG. 21(d) illustrates the UE context for each bearer stored in the storage unit of the UE. As illustrated in the drawing, the UE context for each bearer includes an EPS Bearer ID, a TI, an EPS bearer QoS, and a TFT.

The UE context for each bearer may include information identifying a communication path to be an efficient path.

The EPS Bearer ID is identification information of the EPS bearer. The EPS Bearer ID may be identification information for identifying the SRB and/or the CRB, or may be identification information for identifying the DRB.

The TI is an abbreviation of a "Transaction Identifier", and is identification information identifying a bidirectional message flow (Transaction).

The TFT is an abbreviation of a "Traffic Flow Template", and indicates all packet filters associated with the EPS bearer. In other words, the TFT is information for identifying part of the user data transmitted and/or received, and the UE_A 10 transmits and/or receives the user data identified by the TFT by using the EPS bearer associated with the TFT. In further other words, the UE_A 10 transmits and/or receives the user data identified by the TFT by using the RB associated with the TFT.

Further, the UE_A 10 may transmit and/or receive user data that cannot be identified with the TFT by using the default bearer.

Further, the UE_A 10 may store in advance the TFT in association with the default bearer.

### 1.3. Description of Initial State

An initial state according to the present embodiment will be described. The initial state according to the present embodiment may be a first state to be described later. However, the initial state in the present embodiment may not necessarily be limited to the first state.

### 1.3.1. Description of First State

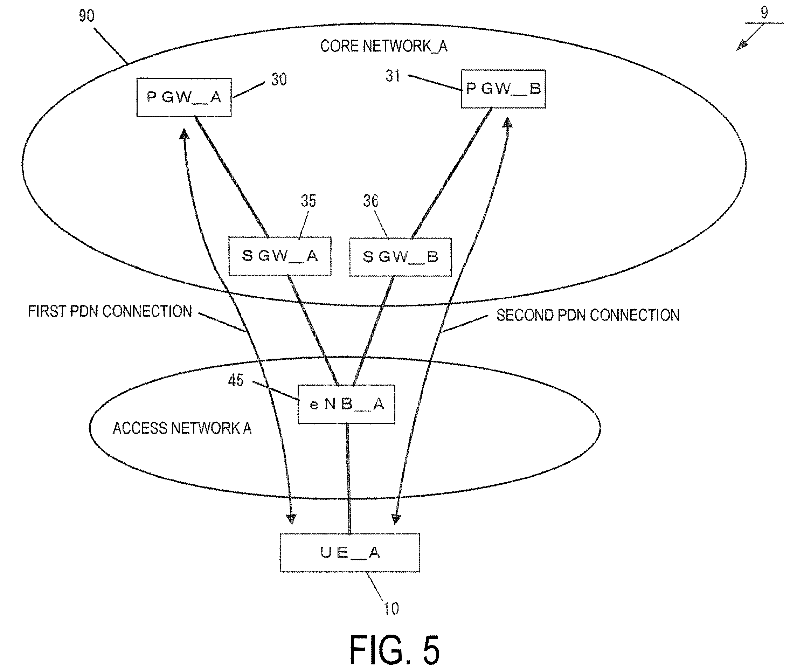

Next, the first state according to the present embodiment will be described with reference to FIG.5.

The first state will be described. In the first state, the UE_A 10 is in a state where a first PDN connection and a second PDN connection are established with the core network 90.

More specifically, the first state is a state in which the UE_A 10 has established the first PDN connection with the PGW_A 30 and has established the second PDN connection with the PGW_B 31.

In addition, the PGW_A 30 may be a gateway device selected by using APN 1. The PGW_B 31 may be a gateway device selected by using APN 2.

Selection of a gateway by using APN 1 and/or APN 2 may be performed by the MME_A 40 provided by being included in the core network_A 90.

Moreover, the gateway device selected by using APN 1 and the gateway device selected by using APN 2 may be the same gateway device or may be different gateway devices from each other.

The first PDN connection may be configured by a communication path between the UE_A 10 and the PGW_A 30 via the eNB_A 45 and/or the SGW_A 35. Hence, the first PDN connection may be configured by a communication path combining the communication path between the UE_A 10 and the eNB_A 45, the communication path between the eNB_A 45 and the SGW_A 35, and the communication path between the SGW_A 35 and the PGW_A 30. Here, each communication path may be a bearer.

The second PDN connection may be configured by a communication path between the UE_A 10 and the PGW_B 31 via the eNB_A 45 and/or the SGW_B 36. Hence, the second PDN connection may be configured by a communication path combining the communication path between the UE_A 10 and the eNB_A 45, the communication path between the eNB_A 45 and the SGW_B 36, and the communication path between the SGW_B 36 and the PGW_B 31. Here, each communication path may be a bearer.

As described above, in the first state, the UE_A 10 may be in a state of being connected with the core network 90 and having established two PDN connections.

The first state has been described above. However, the first state is not limited to this. The first state may be any state provided that the UE_A 10 has established multiple PDN connections with the core network_A 90.

### 1.4. Description of Communication Procedure

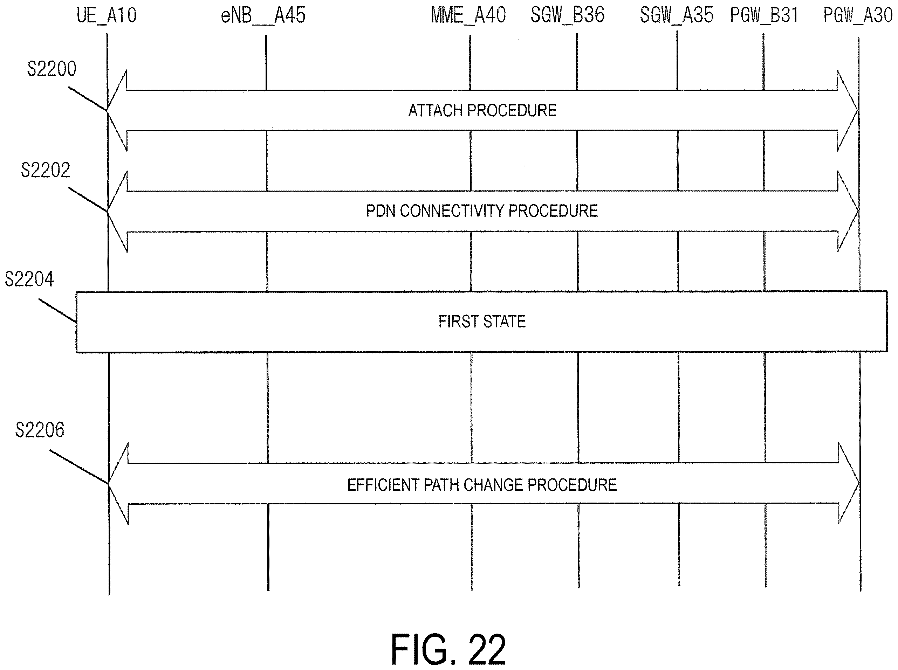

Next, a communication procedure according to the present embodiment will be described with reference to FIG. 22.

As illustrated in FIG. 22, in the communication procedure according to the present embodiment, the UE_A 10 and/or the core network_A 90 performs an attach procedure (S2200) first.

The UE_A 10 and/or the core network_A 90 may establish the first PDN connection in the attach procedure (S2200) or may select and/or determine an efficient path.

The efficient path according to the present embodiment may be an optimal communication path for transmitting and/or receiving user data to and from the UE_A 10. Concrete examples of the communication path may be a PDN connection and a bearer.

Here, the optimal communication path may be selected from multiple communication paths, based on an operator policy and/or a UE policy and/or the location of the UE_A 10 and/or a throughput comparison result and/or the number of hops to a PDN gateway and/or the type of PDN connection, and the like. The selection of the communication path may be performed by the core network_A 90 and/or the MME_40 and/or the UE_A 10. A different communication path may be selected for each application or each service as an optimal communication path.

An optimal communication path may be selected from communication paths established by the UE_A 10 at the time of selecting the optimal communication path. Alternatively, an optimal communication path may be selected from communication paths including a communication path to be newly established by the UE_A 10 and the communication path(s) established by the UE_A 10. More specifically, an optimal communication path may be selected from an existing communication path(s) and a path to be newly established, in a procedure in which the UE_A 10 newly establishes the path.

Each communication path may be a communication path established between the UE_A 10 and a gateway. More specifically, the gateway may be a PGW, a Service Exposure Enable Function (SCEF), or a Local GW (LGW) having connectivity to a local IP network.

Moreover, the multiple communication paths of the UE_A 10 may include communication paths having different PGWs as endpoint nodes. Hence, the multiple communication paths of the UE_A 10 may include communication paths established with multiple respective PGWs.

Similarly, the multiple communication paths of the UE_A 10 may include communication paths having different SCEFs as endpoint nodes. Hence, the multiple communication paths of the UE_A 10 may include communication paths established with multiple respective SCEFs.

Similarly, the multiple communication paths of the UE_A 10 may include communication paths having different L-GWs as endpoint nodes. Hence, the multiple communication paths of the UE_A 10 may include communication paths established with multiple respective L-GWs.

Moreover, the multiple communication paths of the UE_A 10 may include communication paths having a PGW as an endpoint node and/or a communication path having an SCEF as an endpoint node and/or a communication path having an L-GW as an endpoint node.

In other words, the UE_A 10 and/or the eNB_A 45 and/or the MMF_A 40 and/or the SGW_A 35 and/or the PGW_A 30 may establish the first PDN connection through the attach procedure (S2200) or may select and/or determine an efficient path.

The PDN connection established through the attach procedure according to the present embodiment may be the second PDN connection instead of the first PDN connection. In other words, the SGW_A 35 and/or the PGW_A 30 connected in the attach procedure according to the present embodiment may be the SGW_B 36 and/or the PGW_B 31.

Next, the UE_A 10 and/or the core network_A 90 performs a PDN connectivity procedure (S2202).

The UE_A 10 and/or the core network_A 90 may establish the second PDN connection through the PDN connectivity procedure (S2202) or may re-select an efficient path.

In other words, the UE_A 10 and/or the eNB_A 45 and/or the MMF_A 40 and/or the SGW_B 36 and/or the PGW_B 31 may establish the second PDN connection in the PDN connectivity procedure (S2202) or may re-select an efficient path.

The PDN connection established through the PDN connectivity procedure according to the present embodiment may be the first PDN connection instead of the second PDN connection. In other words, the SGW_B 36 and/or the PGW_B 31 connected in the PDN procedure according to the present embodiment may be the SGW_A 35 and/or the PGW_A 30.

The first PDN connection and/or the second PDN connection may be a PDN connection for which an efficient path can be changed.

Based on completion of the attach procedure and completion of the PDN connectivity procedure, the UE_A 10 and/or the core network_A 90 changes its state to the first state (S2204).

Specifically, the UE_A 10 and/or the eNB_A 45 and/or the MME_A 40 and/or the SGW_A 35 and/or the PGW_A 30 and/or the SGW_B 36 and/or the PGW_B 31 changes its state to the first state upon completion of the attach procedure and completion of the PDN connectivity procedure.

Next, the UE_A 10 and/or the core network_A 90 may perform an efficient path change procedure (S2206).

Note that the UE_A 10, and/or the core network_A 90 may start the efficient path change procedure at any timing provided that the UE_A 10 and/or the core network_A 90 is in the first state.

The UE_A 10 and/or the core network_A 90 may change and/or re-select an efficient path through the efficient path change procedure.

Specifically, the UE_A 10 and/or the eNB_A45 and/or the MME_A40 and/or the SGW_A 35 and/or the PGW_A 30 and/or the SGW_B 36 and/or the PGW_B 31 may change and/or re-select an efficient path through the efficient path change procedure.

Here, before describing the detailed steps of each procedure, in order to avoid redundant descriptions, terms peculiar to the present embodiment and primary identification information used in each procedure will be described beforehand.

The first identification information according to the present embodiment may be information indicating that the UE_A 10 has capability of selecting an efficient path and/or capability of switching to an efficient path, and/or information indicating that the UE_A 10 has an efficient path notification function. In other words, the first identification information may be UE Efficient Path Capability.

The second identification information according to the present embodiment may be information indicating that the UE_A 10 requests to select an efficient path and/or information indicating that the UE_A 10 requests notification of an efficient path, and/or information indicating that the UE_A 10 requests to activate the efficient path notification function of the core network_A 90. In other words, the second identification information may be UE Efficient Path Indication.

The third identification information according to the present embodiment may be information indicating that the UE_A 10 is allowed to select an efficient path. In other words, the third identification information may be UE Efficient Path Permission.

The fourth identification information according to the present embodiment may be information indicating the TFT associated with a requested efficient path.

The fifth identification information according to the present embodiment may be information indicating which TFT is associated with an efficient path, among requested TFTs.

The sixth identification information according to the present embodiment may be information indicating that the core network_A 90 has capability of selecting an efficient path and/or capability of switching to an efficient path, and/or information indicating that the core network_A 90 has an efficient path notification function. In other words, the sixth identification information may be Network Efficient Path Capability.

The seventh identification information according to the present embodiment may be information indicating that the core network_A 90 requests to select an efficient path and/or information indicating that the core network_A 90 requests notification of an efficient path, and/or information indicating that the core network_A 90 requests to activate the efficient path notification function of the UE_A 10. In other words, the seventh identification information may be Network Efficient Path Indication.

The eighth identification information according to the present embodiment may be information indicating that the core network_A 90 is allowed to select an efficient path. In other words, the eighth identification information may be Network Efficient Path Permission.

The ninth identification information according to the present embodiment may be information indicating a TFT associated with an approved efficient path.

The tenth identification information according to the present embodiment may be information indicating which TFT is associated with an efficient path among approved TFTs.

The eleventh identification information according to the present embodiment may be information indicating a request to change an efficient path.

The twelfth identification information according to the present embodiment may be information indicating that change of an efficient path is approved.

The thirteenth identification information according to the present embodiment may be information indicating that a communication path is an efficient path. The thirteenth identification information may be configured by including at least identification information of a communication path and information indicating that the communication path is an efficient path. The identification information of a communication path may be bearer identification information, such as a bearer ID, and/or an APN and/or an IP address and/or PDN connection identification information, or the like.

Alternatively, the thirteenth identification information may be configured by including at least identification information of an access network and information indicating that the communication path is an efficient path. The identification information of an access network may be a type of Radio Access Network Technology (RAT) such as LTE or WiFi.

The UE_A 10 may request the core network_A 90 to change an efficient path by transmitting the thirteenth identification information included in a bearer resource modification request message. In other words, the thirteenth identification information may be information indicating that information indicates a request to change an efficient path.

Note that in a case that the UE_A 10 and/or the eNB_A 45 and/or the MME_A 40 and/or the SGW_A 35 and/or the PGW_A 30 holds the respective pieces of identification information, the UE_A 10 and/or the eNB_A 45 and/or the MMF_A 40 and/or the SGW_A 35 and/or the PGW_A 30 may have capability indicated by the respective pieces of identification information.

In the present embodiment, in a case that two or more pieces of identification information among the first to twelfth identification information are transmitted by being included in the same control message, all the pieces of identification information may be included in the control message and transmitted, or one piece of identification information having meanings of respective pieces of identification information may be included in the control message.

Note that each piece of identification information may be an information element configured as a flag or a parameter.

### 1.4.1. Example of Attach Procedure

First, an example of an attach procedure will be described.

In this attach procedure, the SGW_A 35 may be the SGW_B 36, and the PGW_A 30 may be the PGW_B 31. Hence, this attach procedure will be described by using the SGW_A 35 and the PGW_A 30.

Note that the attach procedure is a procedure initiated by the UE_A 10 to start. The attach procedure is a procedure in which the UE_A 10 establishes a connection with a network. Specifically, the attach procedure is a procedure for establishing a connection with an access network including the eNB 45 and also a procedure for establishing a connection with a core network through the access network. Through the attach procedure, the UE_A 10 establishes a communication path for transmitting and/or receiving user data to and from the PDN_A 5.

A trigger for the UE_A 10 to start the attach procedure may be the time when the terminal is turned on. Additionally, the UE_A 10 may start the attach procedure at arbitrary timing provided that the UE_A 10 is not connected to the core network_A 90 regardless of the above.

As a result of completion of the attach procedure, the UE_A 10 establishes a PDN connection with the core network_A 90.

In other words, as a result of completion of the attach procedure, the UE_A 10 establishes a PDN connection with the PGW_A 30.

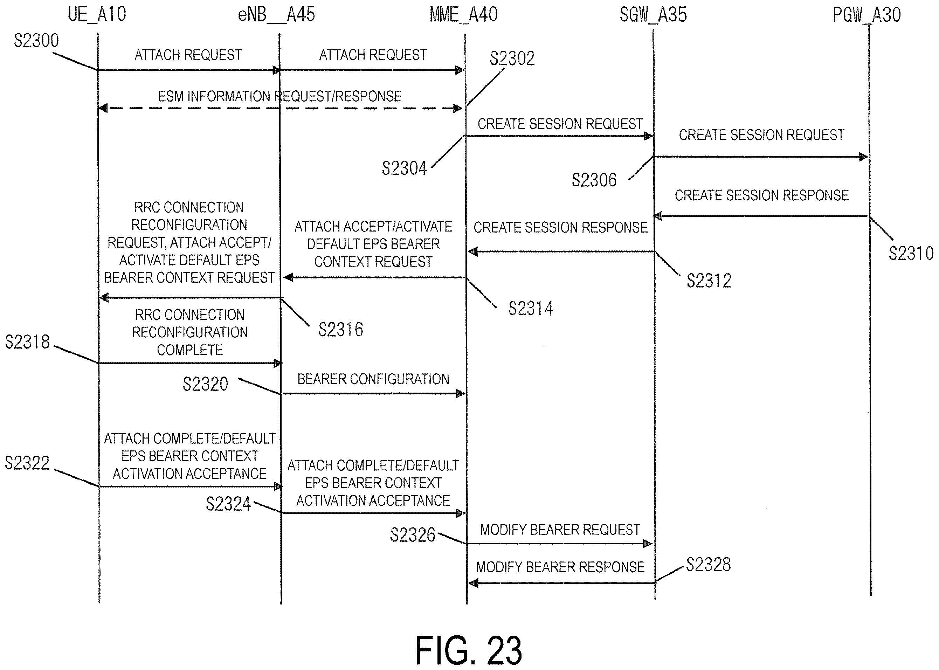

An example of steps of the attach procedure will be described below with reference to FIG. 23.

First, the UE_A 10 transmits an attach request message to the MMF_A 40 (S2300). Note that the UE_A 10 may transmit the attach request message to the eNB_A 45, and the transmitted attach request message may be transferred to the MMF_A 40 via the eNB 45.

Additionally, the UE_A 10 may transmit a PDN connectivity request message with the attach request message. In the description of the present embodiment below, a description will be given by assuming that the attach request message includes both an attach request message and a PDN connectivity request message. Moreover, in a case of using an expression that identification information is included in the attach request message in the description of the present embodiment, this means that the identification information is included in the attach request message and/or the PDN connectivity request message.

The UE_A 10 may include at least one or more pieces of identification information among the first identification information to the fifth identification information in the attach request message. By transmitting the attach request message by including one or more pieces of the identification information of the first identification information to the fifth identification information, the UE_A 10 may request to establish a PDN connection for which an efficient path can be changed, or may indicate which communication path is an efficient path.

Further, the UE_A 10 may transmit an APN included in the attach request message.

Here, the UE_A 10 may transmit the one or more pieces of the identification information of the first identification information to the fifth identification information and/or the APN included in a control message different from the attach request message in the attach procedure, instead of transmitting, to the MMF_A 40, these included in the attach request message.

For example, after transmitting the attach request message, the UE_A 10 may request EPS Session Management (ESM) information and perform a control message transmission and/or reception procedure for making a response based on the request (S2302).

More specifically, the MME_A 40 transmits an ESM request message to the UE_A 10. The UE_A 10 receives the ESM request message and transmits a response message to the MMF_A 40. In this step, the UE_A 10 may transmit one or more pieces of the identification information of the first identification information to the fifth identification information and/or the APN included in the response message.

Here, the UE_A 10 may encrypt an ESM response message and transmit the encrypted ESM response message. Moreover, the UE_A 10 may receive, from the MMF_A 40, information for encrypting an ESM response message. In response to reception of the attach request message, the MMF_A 40 may transmit, to the UE_A 10, information for encrypting a NAS message. A NAS message for transmitting information for encrypting the NAS message may be a Security Mode Command message.

The MMF_A 40 receives the attach request message. Furthermore, based on reception of the attach request message or reception of the ESM response message, the MMF_A 40 acquires one or more pieces of identification information of the first identification information to the fifth identification information.

Based on the information included in the attach request message and/or subscriber information and/or the operator policy and/or the identification information held by the MMF_A 40, the MMF_A 40 may determine establishment of a PDN connection with the UE_A 10 and/or which communication path is an efficient path.

For example, the MME_A 40 may determine, as the efficient path, a communication path associated with the TFT indicated by the fourth identification information and/or the fifth identification information.

The MMF_A 40 may determine, as the efficient path, a default communication path and/or a communication path based on the subscriber information or the operator policy, instead of the communication path associated with the TFT indicated by the fourth identification information and/or the fifth identification information.

The MMF_A 40 may determine, as the efficient path, a communication path selected using a function provided by another device, instead of selecting by itself a communication path as the efficient path.

The function provided by another device may, for example, be an efficient path selection function for performing selection of an efficient path.

Thus, determination of which communication path is an efficient path is not limited to the above.

The MMF_A 40 may transmit the TFT associated with the communication path determined as the efficient path, in the ninth identification information.

The MMF_A 40 may transmit information identifying the TFT associated with the communication path determined as the efficient path, in the tenth identification information.

The MMF_A 40 may transmit the thirteenth identification information associated with the communication path determined as the efficient path.

Based on the reception of the attach request message and/or the reception of the ESM response message and/or the determination of which communication path is an efficient path, the MMF_A 40 transmits a create session request message to the SGW_A 35 (S2304).

The MMF_A 40 may transmit at least one or more pieces of identification information of the first identification information to the fifth identification information and/or the ninth identification information and/or the tenth identification information and/or the thirteenth identification information included in the create session request message.

Here, in the description above, the MMF_A 40 has been described as determining which communication path is an efficient path, but in place of the MMF_A 40, the PGW_A 30 may determine which communication path is an efficient path. In this case, the MME_A 40 may transmit the create session request message without including the ninth identification information and/or the tenth identification information and/or the thirteenth identification information.

The SGW_A 35 receives the create session request message. In addition, based on the reception of the create session request message, the SGW_A 35 acquires one or more pieces of identification information of the first identification information to the fifth identification information and/or the ninth identification information and/or the tenth identification information and/or the thirteenth identification information.

Based on the reception of the create session request message, the SGW_A 35 transmits the create session request message to the PGW_A 30 (S2306).

The SGW_A 35 may transmit at least one or more pieces of identification information of the first identification information to the fifth identification information and/or the ninth identification information and/or the tenth identification information and/or the thirteenth identification information included in the create session request message.

The PGW_A 30 receives the create session request message. In addition, based on the reception of the create session response message, the PGW_A 30 acquires one or more pieces of identification information of the first identification information to the fifth identification information and/or the ninth identification information and/or the tenth identification information and/or the thirteenth identification information.

Based on information included in the create session request message and/or the subscriber information and/or the operator policy and/or the identification information held by the PGW_A 30, the PGW_A 30 may determine which communication path is an efficient path.

For example, the PGW_A 30 may determine, as the efficient path, a communication path associated with the TFT indicated by the fourth identification information and/or the fifth identification information.

The PGW_A 30 may determine, as the efficient path, a default communication path and/or a communication path based on the subscriber information or the operator policy, instead of the communication path associated with the TFT indicated by the fourth identification information and/or the fifth identification information.

The PGW_A 30 may determine, as the efficient path, a communication path selected using a function provided by another device, instead of selecting by itself a communication path as the efficient path.

The function provided by another device may, for example, be an efficient path selection function for performing selection of an efficient path.

Thus, determination of which communication path is an efficient path is not limited to the above.

The PGW_A 30 may transmit the TFT associated with the communication path determined as the efficient path, in the ninth identification information.

The PGW_A 30 may transmit information identifying the TFT associated with the communication path determined as the efficient path, in the tenth identification information.

The PGW_A 30 may transmit the thirteenth identification information associated with the communication path determined as the efficient path.

Here, in the description above, a description has been given of a case that the PGW_A 30 determines which communication path is an efficient path, but in a case that the MMF_A 40 determines which communication path is an efficient path, the PGW_A 30 may not necessarily determine which communication path is an efficient path.

In other words, in a case that the PGW_A 30 has received the ninth identification information and/or the tenth identification information and/or the thirteenth identification information, the PGW_A 30 may not necessarily determine which communication path is an efficient path.

Based on the reception of the create session request message and/or the determination of which communication path is an efficient path, the PGW_A 30 transmits a create session response message to the SGW_A 35 (S2310).

The PGW_A 30 may include at least one or more pieces of identification information of the sixth identification information to the tenth identification information and/or the thirteenth identification information in the create session response message.

Note that the create session response message may be a response message corresponding to the create session request message.

The SGW_A 35 receives the create session response message. In addition, based on the reception of the create session response message, the SGW_A 35 acquires the one or more pieces of identification information of the sixth identification information to the tenth identification information and/or the thirteenth identification information.

Based on the reception of the create session response message, the SGW_A 35 transmits the create session response message to the MME_A40 (S2312).

The SGW_A 35 may include at least one or more pieces of identification information of the sixth identification information to the tenth identification information and/or the thirteenth identification information in the create session response message.

The MME_A 40 receives the create session response message. In addition, based on the reception of the create session response message, the MMF_A 40 acquires the one or more pieces of identification information of the sixth identification information to the tenth identification information and/or the thirteenth identification information.

Based on the reception of the create session response message, the MMF_A 40 transmits an attach accept message to the eNB_A45 (S2314).

The MMF_A 40 may transmit an APN and/or a PDN address and/or an EPS bearer ID included in the attach accept message.

Note that the MME_A 40 may include an APN and/or a PDN address and/or an EPS bearer ID in the attach accept message to identify a PDN connection and/or a default bearer to be established.

In addition, the MMF_A 40 may store the transmitted APN and/or PDN address and/or EPS bearer ID in the MME context.

The MMF_A 40 may store the information indicated by respective pieces of transmitted identification information in association with the transmitted APN and/or PDN address and/or EPS bearer ID.

The PDN address may be an IP address assigned to the UE_A 10. More specifically, the PDN address may be an IP address of the UE_A 10 assigned by the PGW_A 30.

Additionally, the MMF_A 40 may transmit an activate default EPS bearer context request message with the attach accept message. In the description of the present embodiment below, a description will be given by assuming that the attach accept message includes an attach accept message and an activate EPS bearer context request message. Moreover, in a case of using an expression that identification information is included in the attach accept message in the description of the present embodiment, this means that the identification information is included in the attach accept message and/or the activate default EPS bearer context request message.

The MMF_A 40 may include at least one or more pieces of identification information of the sixth identification information to the tenth identification information and/or the thirteenth identification information in the attach accept message.

Note that the attach accept message may be a response message to the attach request message.

The eNB_A 45 receives the attach accept message and transmits an RRC message including the attach accept message to the UE_A 10 (S2316). Note that the RRC message may be an RRC connection reconfiguration request message.

The UE_A 10 receives the RRC message including the attach accept message. Furthermore, in a case that one or more pieces of identification information of the sixth identification information to the tenth identification information and/or the thirteenth identification information is included in the attach accept message, the UE_A 10 acquires the identification information.

Based on the reception of the attach accept message, the UE_A 10 may receive the APN and/or the PDN address and/or the EPS bearer ID.

Note that based on the received APN and/or PDN address and/or EPS bearer ID, the UE_A 10 may identify a PDN connection and/or a default bearer to be established.

The UE_A 10 may store the received APN and/or PDN address and/or EPS bearer ID in the UE context.

The UE_A 10 may store the information indicated by respective pieces of received identification information in association with the received APN and/or PDN address and/or EPS bearer ID.

The PDN address may be an IP address assigned to the UE_A 10. More specifically, the PDN address may be an IP address of the UE_A 10 assigned by the PGW_A 30.

The ESP bearer ID and/or the APN and/or the IP address may be identification information of a PDN connection and/or a default bearer and/or an EPS bearer.

Based on the reception of the attach accept message and/or the information included in the attach accept message, the UE_A 10 may identify establishment of a PDN connection for which an efficient path can be changed and/or a communication path determined as an efficient path.

More specifically, based on the reception of the sixth identification information and/or the seventh identification information and/or the eighth identification information, the UE_A 10 may identify that a PDN connection for which an efficient path can be changed has been established.

The UE_A 10 may identify, as an efficient path, the communication path associated with the TFT included in the received ninth identification information and/or the TFT identified by the tenth identification information.

The UE_A 10 may identify, as an efficient path, the communication path associated with the received thirteenth identification information.

In a case that the information indicating an efficient path associated with the TFT and the information indicating an efficient path associated with the PDN connection and/or the UE_A 10 are different from each other, the UE_A 10 may change an efficient path in accordance with user data to transmit and/or receive.

As an example, a description will be given of a case with information indicating an efficient path associated with TFT 1, which is one of TFTs.

In a case of transmitting and/or receiving user data identified by TFT 1, the UE_A 10 may identify, as an efficient path, the communication path identified by information indicating an efficient path associated with TFT 1.

In a case of transmitting and/or receiving user data identified by TFT 1, the UE_A 10 may identify, as an efficient path, the communication path identified by information indicating an efficient path associated with the PDN connection and/or the UE_A 10.

In order to respond to the received RRC message, the UE_A 10 transmits an RRC message to the eNB_A 45 (S2318). The RRC message may be an RRC connection reconfiguration complete message.

The eNB_A 45 receives an RRC connection reconfiguration message, and transmits a bearer configuration message to the MME_A 40, based on the reception (S2320).

Additionally, the UE_A 10 transmits an RRC message including an attach complete message to the eNB_A 45, based on the reception of the attach accept message (S2322). Here, the attach complete message may be a response message to the attach accept message.

Note that the RRC message to be transmitted while including the attach complete message may be a Direct Transfer message.

The eNB_45 receives the RRC message including the attach complete message and transmits the attach complete message to the MME_A 40 (S2324).

The MMF_A 40 receives the attach complete message.

Based on the reception of the attach complete message, the MMF_A 40 may transmit a modify bearer request message to the SGW_A 35 (S2326).

The SGW_A 35 receives the modify bearer request message.

Based on the reception of the modify bearer request message, the SGW_A 35 transmits a modify bearer response message to the MME_A 40 (S2328).

Note that a modify bearer response message may be a response message to the modify bearer request message.

The MMF_A 40 receives the modify bearer response message.

By the above-described steps, the UE_A 10 establishes a connection with the network and completes the attach procedure.

Upon completion of the attach procedure, the UE_A 10 and/or the core network_A 90 may establish a PDN connection. Moreover, upon completion of the attach procedure, the UE_A 10 and/or the core network_A 90 may determine which communication path is an efficient path.

In other words, upon completion of the attach procedure, the UE_A 10 may acquire, from the core network_A 90, the TFT associated with the efficient path.

Note that the UE_A 10 can acquire the UE context illustrated in FIGS. 21(b) to 21(d) from the core network_A 90 through the attach procedure and store the context.

More specifically, through the PDN connectivity procedure, the UE_A 10 can acquire information identifying the selected communication path to be an efficient path from the core network_A 90, and store the information in a UE context for each PDN connection and/or a UE context for each bearer.

Through the PDN connectivity procedure, the MMF_A 40 can store the information identifying the selected communication path to be an efficient path in an MME context for each PDN connection and/or an MME context for each EPS bearer.

Through the PDN connectivity procedure, the SGW_A 35 and/or the PGW_A 30 can store the information identifying the selected communication path to be an efficient path in an EPS bearer context for each PDN connection and/or an EPS bearer context for each EPS bearer.

### 1.4.2. Example of PDN Connectivity Procedure

Next, an example of the PDN connectivity procedure will be described.

In this PDN connectivity procedure, the SGW_A 35 may be the SGW_B 36, and the PGW_A 30 may be the PGW_B 31. Hence, this PDN connectivity procedure will be described by using the SGW_A 35 and the PGW_A 30.

Note that the PDN connectivity procedure is a procedure initiated by the UE_A 10 to start. Note that the PDN connectivity procedure is a procedure for establishing the communication path via which the UE_A 10 transmits and/or receives user data to/from the PDN_A 5. In other words, the PDN connectivity procedure is a procedure for establishing a PDN connection that the UE_A 10 uses for transmitting and/or receiving user data to/from the PGW_A 30.

The timing at which the UE_A 10 starts the PDN connectivity procedure may be based on completion of the attach procedure, at the time when the terminal is turned on, or at arbitrary timing.

Upon completion of the PDN connectivity procedure, the UE_A 10 establishes a PDN connection with the core network_A 90.

In accordance with the completion of the PDN connectivity procedure, the UE_A 10 establishes the PDN connection with the PGW_A 30.

Note that the UE_A 10 and/or the core network_A 90 can establish multiple PDN connections by performing the PDN connectivity procedure multiple times.

In the following, details of the example of the PDN connectivity procedure will be described.

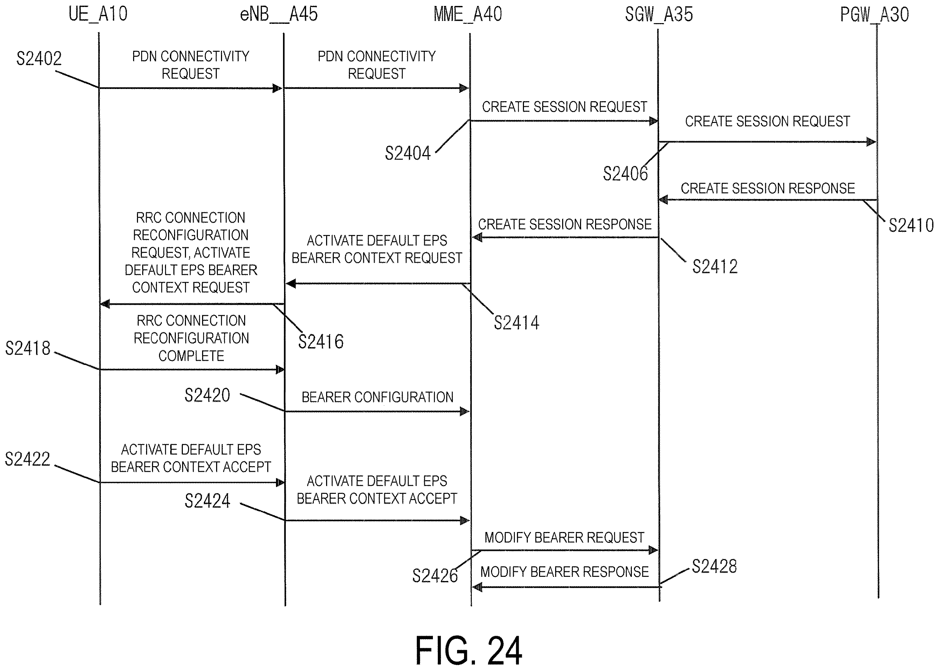

An example of steps of the PDN connectivity procedure will be described below with reference to FIG. 24.

First, the UE_A 10 transmits a PDN connectivity request message to the MME_A 40 (S2402). Note that the UE_A 10 may transmit the PDN connectivity request message to the eNB_A 45, and the transmitted PDN connectivity request message may be transferred to the MME_A 40 via the eNB_A 45.

The UE_A 10 may include at least one or more pieces of identification information of the first identification information to the fifth identification information in the PDN connectivity request message. By transmitting the PDN connectivity request message by including one or more pieces of identification information of the first identification information to the fifth identification information, the UE_A 10 may request establishment of a PDN connection for which an efficient path can be changed, or may indicate which communication path is an efficient path.

Further, the UE_A 10 may transmit an APN while being included in the PDN connectivity request message. Note that the UE_A 10 may include different APNs in the PDN connectivity request message to request establishment of different PDN connections.

The MMF_A 40 receives the PDN connectivity request message. In addition, based on the reception of the PDN connectivity request message, the MMF_A 40 acquires one or more pieces of identification information of the first identification information to the fifth identification information and/or the APN.

Based on the information included in the PDN connectivity request message and/or subscriber information and/or the operator policy and/or the identification information held by the MMF_A 40, the MMF_A 40 may determine establishment of a PDN connection with the UE_A 10 and/or which communication path is an efficient path.

For example, the MME_A 40 may determine, as the efficient path, a communication path associated with the TFT indicated by the fourth identification information and/or the fifth identification information.

Further, instead of the communication path associated with the TFT indicated by the fourth identification information and/or the fifth identification information, the MMF_A 40 may determine, as an efficient path, a default communication path and/or a communication path based on the subscriber information or the operator policy.

The MMF_A 40 may determine, as the efficient path, a communication path selected using a function provided by another device, instead of selecting by itself a communication path as the efficient path.

The function provided by another device may, for example, be an efficient path selection function for performing selection of an efficient path.

Thus, determination of which communication path is an efficient path is not limited to the above.

The MMF_A 40 may transmit the TFT associated with the communication path determined as the efficient path, in the ninth identification information.

The MMF_A 40 may transmit information identifying the TFT associated with the communication path determined as the efficient path, in the tenth identification information.

The MMF_A 40 may transmit the thirteenth identification information associated with the communication path determined as the efficient path.

Based on the reception of the PDN connectivity request message and/or the determination of which communication path is an efficient path, the MMF_A 40 transmits a create session request message to the SGW_A 35 (S2404).

The MMF_A 40 may transmit at least one or more pieces of identification information of the first identification information to the fifth identification information and/or the ninth identification information and/or the tenth identification information and/or the thirteenth identification information included in the create session request message.

Here, in the description above, the MMF_A 40 has been described as determining which communication path is an efficient path, but in place of the MMF_A 40, the PGW_A 30 may determine which communication path is an efficient path. In this case, the MME_A 40 may transmit the create session request message without including the ninth identification information and/or the tenth identification information and/or the thirteenth identification information.

The SGW_A 35 receives the create session request message. In addition, based on the reception of the create session response message, the SGW_A 35 acquires one or more pieces of identification information of the first identification information to the fifth identification information and/or the ninth identification information and/or the tenth identification information and/or the thirteenth identification information.

Based on the reception of the create session request message, the SGW_A 35 transmits the create session request message to the PGW_A 30 (S2406).

The SGW_A 35 may transmit at least one or more pieces of identification information of the first identification information to the fifth identification information and/or the ninth identification information and/or the tenth identification information and/or the thirteenth identification information included in the create session request message.

The PGW_A 30 receives the create session request message. In addition, based on the reception of the create session request message, the PGW_A 30 acquires one or more pieces of identification information of the first identification information to the fifth identification information and/or the ninth identification information and/or the tenth identification information and/or the thirteenth identification information.

Based on information included in the create session request message and/or the subscriber information and/or the operator policy and/or the identification information held by the PGW_A 30, the PGW_A 30 may determine which communication path is an efficient path.

For example, the PGW_A 30 may determine, as the efficient path, a communication path associated with the TFT indicated by the fourth identification information and/or the fifth identification information.

The PGW_A 30 may determine, as the efficient path, a default communication path and/or a communication path based on the subscriber information or the operator policy, instead of the communication path associated with the TFT indicated by the fourth identification information and/or the fifth identification information.

The PGW_A 30 may determine, as the efficient path, a communication path selected using a function provided by another device, instead of selecting by itself a communication path as the efficient path.

The function provided by another device may, for example, be an efficient path selection function for performing selection of an efficient path.

Thus, determination of which communication path is an efficient path is not limited to the above.

The PGW_A 30 may transmit the TFT associated with the communication path determined as the efficient path, in the ninth identification information.

The PGW_A 30 may transmit information identifying the TFT associated with the communication path determined as the efficient path, in the tenth identification information.

The PGW_A 30 may transmit the thirteenth identification information associated with the communication path determined as the efficient path.

Here, in the description above, a description has been given of a case that the PGW_A 30 determines which communication path is an efficient path, but in a case that the MMF_A 40 determines which communication path is an efficient path, the PGW_A 30 may not necessarily determine which communication path is an efficient path.

In other words, in a case that the PGW_A 30 has received the ninth identification information and/or the tenth identification information and/or the thirteenth identification information, the PGW_A 30 may not necessarily determine which communication path is an efficient path.

Based on the reception of the create session request message and/or the determination of which communication path is an efficient path, the PGW_A 30 transmits a create session response message to the SGW_A 35 (S2410).

The PGW_A 30 may include at least one or more pieces of identification information of the sixth identification information to the tenth identification information and/or the thirteenth identification information in the create session response message.

Note that the create session response message may be a response message corresponding to the create session request message.

The SGW_A 35 receives the create session response message. In addition, based on the reception of the create session response message, the SGW_A 35 acquires the one or more pieces of identification information of the sixth identification information to the tenth identification information and/or the thirteenth identification information.

Based on the reception of the create session response message, the SGW_A 35 transmits the create session response message to the MME_A 40 (S2412).

The SGW_A 35 may include at least one or more pieces of identification information of the sixth identification information to the tenth identification information and/or the thirteenth identification information in the create session response message.

The MME_A 40 receives the create session response message. In addition, based on the reception of the create session response message, the MMF_A 40 acquires the one or more pieces of identification information of the sixth identification information to the tenth identification information and/or the thirteenth identification information.

Based on the reception of the create session response message, the MMF_A 40 transmits an activate default EPS bearer context request message to the eNB_A 45 (S2414).

The MMF_A 40 may include at least one or more pieces of identification information of the sixth identification information to the tenth identification information and/or the thirteenth identification information in the activate default EPS bearer context request message.

Note that the activate default EPS bearer context request message may be a response message to the PDN connectivity request message.

The MMF_A 40 may transmit an APN and/or a PDN address and/or an EPS bearer ID while being included in the activate default EPS bearer context request message.

Note that the MME_A 40 may include an APN and/or a PDN address and/or an EPS bearer ID in the activate default EPS bearer context request message to identify a PDN connection and/or a default bearer to be established. For example, the MMF_A 40 may include different APNs and/or different PDN addresses and/or different EPS bearer IDs in the activate default EPS bearer context request message to indicate that different PDN connections are to be established.

In addition, the MMF_A 40 may store the transmitted APN and/or PDN address and/or EPS bearer ID in the MME context.

The MMF_A 40 may store the information indicated by respective pieces of transmitted identification information in association with the transmitted APN and/or PDN address and/or EPS bearer ID.

The PDN address may be an IP address assigned to the UE_A 10. More specifically, the PDN address may be an IP address of the UE_A 10 assigned by the PGW_A 30.

The ESP bearer ID and/or the APN and/or the IP address may be identification information identification information of a communication path may be identification information of a PDN connection and/or a default bearer and/or an EPS bearer.

The eNB_A45 receives the activate default EPS bearer context request message and transmits, to the UE_A 10, an RRC message including the activate default EPS bearer context request message (S2416). Note that the RRC message may be an RRC connection reconfiguration request message.

The UE_A 10 receives the RRC message including the activate default EPS bearer context request message. Furthermore, in a case that one or more pieces of identification information of the sixth identification information to the tenth identification information and/or the thirteenth identification information is included in the activate default EPS bearer context request message, the UE_A 10 acquires the identification information.

Based on the reception of the activate default EPS bearer context request message, the UE_A 10 may receive the APN and/or the PDN address and/or the EPS bearer ID.

Note that based on the received APN and/or PDN address and/or EPS bearer ID, the UE_A 10 may identify a PDN connection and/or a default bearer to be established. For example, based on reception of different APNs and/or different PDN addresses and/or different EPS bearer IDs, the UE_A 10 may identify establishment of different PDN connections and/or different default bearers.

The UE_A 10 may store the received APN and/or PDN address and/or EPS bearer ID in the UE context.

The UE_A 10 may store the information indicated by respective pieces of received identification information in association with the received APN and/or PDN address and/or EPS bearer ID.

The PDN address may be an IP address assigned to the UE_A 10. More specifically, the PDN address may be an IP address of the UE_A 10 assigned by the PGW_A 30.

The ESP bearer ID and/or the APN and/or the IP address may be identification information identification information of a communication path may be identification information of a PDN connection and/or a default bearer and/or an EPS bearer.

Based on the reception of the activate default EPS bearer context request message and/or the information included in the activate default EPS bearer context request message, the UE_A 10 may identify establishment of a PDN connection for which an efficient path can be changed and/or a communication path determined as an efficient path.

More specifically, based on the reception of the sixth identification information and/or the seventh identification information and/or the eighth identification information, the UE_A 10 may identify that a PDN connection for which an efficient path can be changed has been established.

The UE_A 10 may identify, as an efficient path, the communication path associated with the TFT included in the received ninth identification information and/or the TFT identified by the tenth identification information.

The UE_A 10 may identify, as an efficient path, the communication path associated with the received thirteenth identification information.

In a case that information indicating an efficient path is already stored, the UE_A 10 may identify, based on the reception of the ninth identification information and/or the tenth identification information and/or the thirteenth identification information, the communication path identified by received identification information, as an efficient path.

In a case that the information indicating an efficient path associated with the TFT and the information indicating an efficient path associated with the PDN connection and/or the UE_A 10 are different from each other, the UE_A 10 may change an efficient path in accordance with user data to transmit and/or receive.

As an example, a description will be given of a case with information indicating an efficient path associated with TFT 1, which is one of TFTs.

In the case of transmitting and/or receiving user data identified by TFT 1, the UE_A 10 may identify, as an efficient path, the communication path identified by information indicating an efficient path associated with TFT 1.

In the case of transmitting and/or receiving user data identified by TFT 1, the UE_A 10 may identify, as an efficient path, the communication path identified by information indicating an efficient path associated with the PDN connection and/or the UE_A 10.

In order to respond to the received RRC message, the UE_A 10 transmits the RRC message to the eNB_A45 (S2418). The RRC message may be an RRC connection reconfiguration complete message.

The eNB_A 45 receives an RRC connection reconfiguration message, and transmits a bearer configuration message to the MMF_A 40 based on the reception (S2420).

Further, based on the reception of the activate default EPS bearer context request message, the UE_A 10 transmits the RRC message including an activate default EPS bearer context accept message to the eNB_A45 (S2422). Here, the activate default EPS bearer context accept message may be a response message to the activate default EPS bearer context request message.

Note that the RRC message transmitted while including the activate default EPS bearer context accept message may be a Direct Transfer message.

The eNB_45 receives the RRC message including the activate default EPS bearer context accept message and transmits the activate default EPS bearer context accept message to the MME_A 40 (S2424).

The MMF_A 40 receives the activate default EPS bearer context accept message.

Based on the reception of the activate default EPS bearer context accept message, the MME_A 40 may transmit a modify bearer request message to the SGW_A 35 (S2426).

The SGW_A 35 receives the modify bearer request message.

Based on the reception of the modify bearer request message, the SGW_A 35 transmits a modify bearer response message to the MME_A 40 (S2428).

Note that the modify bearer response message may be a response message to the modify bearer request message.

The MMF_A 40 receives the modify bearer response message.

By the above-described steps, the UE_A 10 connects to the network, and completes the PDN connectivity procedure. Upon completion of the PDN connectivity procedure, the UE_A 10 and/or the core network_A 90 may establish a PDN connection. Moreover, upon completion of the PDN connectivity procedure, the UE_A 10 and/or the core network_A 90 may determine which communication path is an efficient path.

In other words, upon completion of the PDN connectivity procedure, the UE_A 10 may acquire, from the core network_A 90, the TFT associated with the efficient path.

Note that, through the PDN connectivity procedure, the UE_A 10 can acquire the UE context illustrated in any of FIGS. 21(b) to 21(d) from the core network_A 90, and store the UE context.

More specifically, through the PDN connectivity procedure, the UE_A 10 can acquire information identifying the selected communication path to be an efficient path from the core network_A 90, and store a UE context for each PDN connection and/or a UE context for each bearer.

Through the PDN connectivity procedure, the MMF_A 40 can store the information identifying the selected communication path to be an efficient path in an MME context for each PDN connection and/or an MME context for each EPS bearer.

Through the PDN connectivity procedure, the SGW_A 35 and/or the PGW_A 30 can store the information identifying the selected communication path to be an efficient path in an EPS bearer context for each PDN connection and/or an EPS bearer context for each EPS bearer.

### 1.4.2.1. Modified Example of PDN Connectivity Procedure

Regarding the core network_A 90 in the example of the PDN connectivity procedure described above, a PDN connectivity procedure is described for a case adopting a core network configured to include the MMF_A 40, the SGW_A 35, and the PGW_A 30 described with reference to FIGS. 2A and 2B; however, the core network_A 90 may be configured to include another device.

In this case, a NAS message, such as the PDN connectivity request message or the activate default EPS bearer context accept message described in the present procedure and transmitted by the UE_A 10, is received not by the MMF_A 40 but a device in the core network_A 90.

Accordingly, the reception and the processes of the NAS message by the MMF_A 40 in the above description can be replaced with those performed by a device in the core network_A 90.

Furthermore, the transmission and the processes of the NAS message such as the activate default EPS bearer context request message or the like by the MMF_A 40 in the above description can be replaced with those performed by the device in the core network_A 90.

### 1.4.3. Example of Efficient Path Change Procedure

First, an example of an efficient path change procedure will be described. Note that the efficient path change procedure is a procedure initiated by the UE_A 10 and/or the core network_A 90 and/or an arbitrary device to start. In other words, the efficient path change procedure includes a procedure initiated by the UE_A 10 to start, a procedure initiated by the MMF_A 40 and/or the PGW_A 30 to start, and a procedure initiated by the arbitrary device to start.

Note that the efficient path change procedure is a procedure for changing and/or re-selecting an efficient path for the UE_A 10 and/or the core network_A 90 and/or the arbitrary device.

The timing at which the UE_A 10 and/or the core network_A 90 and/or the arbitrary device starts the efficient path change procedure may correspond to the time when the attach procedure and/or the PDN connectivity procedure is completed. The timing at which the UE_A 10 and/or the core network_A 90 and/or the arbitrary device starts the efficient path change procedure may correspond to the timing at which the efficient path is detected as being not optimal. Regardless of the above, the UE_A 10 and/or the core network_A 90 and/or the arbitrary device may start the efficient path change procedure at arbitrary timing provided that the UE_A 10 is in the first state.

Note that a device in the core network_A 90 that starts the efficient path change procedure may be the MMF_A 40, the PGW_A 30, or the PGW_B 31.

Note that a trigger to start the efficient path change procedure may be an operation of the UE_A 10, the operator policy, the subscriber information, or a function provided by another device.

More specifically, a trigger to start the efficient path change procedure initiated by the UE_A 10 may be based on an operation of the UE_A 10 or may be detection for the UE_A 10 that the efficient path is not optimal.

A trigger to start the efficient path change procedure initiated by the core network_A 90 may be based on the network policy of the operator, the subscriber information, or a function provided by another device or may be based on detection by a device in the core network_A 90 that the efficient path is not optimal, rather than being based on reception of a bearer resource modification request message transmitted from the UE_A 10.

The function provided by another device may, for example, be a function for detecting that update of the efficient path is necessary or an efficient path selection function for performing selection of an efficient path.

Upon completion of the efficient path change procedure, the UE_A 10 and/or the core network_A 90 can transmit and/or receive user data, based on a new efficient path.

Specifically, upon completion of the efficient path change procedure, the UE_A 10 and/or the MMF_A 40 and/or the PGW_A 30 and/or the PGW_B 31 can transmit and/or receive user data, based on the new efficient path.

Note that below, details will be described of the efficient path change procedure initiated by the UE_A 10 as an example of a first efficient path change procedure. Further, details will be described of the efficient path change procedure initiated by the core network_A 90 as an example of a second efficient path change procedure. Further, details will be described of the efficient path change procedure initiated by the arbitrary device as an example of a third efficient path change procedure.

Note that, here, a description will be given of a procedure in which the UE_A 10 and/or the core network_A 90 changes the efficient path from the first PDN connection to the second PDN connection.

A procedure in which the UE_A 10 and/or the core network_A 90 changes the efficient path from the second PDN connection to the first PDN connection may be the same as the efficient path change procedure according to the present embodiment. Hence, a description thereof is omitted here.

### 1.4.3.1. Example of First Efficient Path Change Procedure

The first efficient path change procedure is the efficient path change procedure initiated by the UE_A 10.

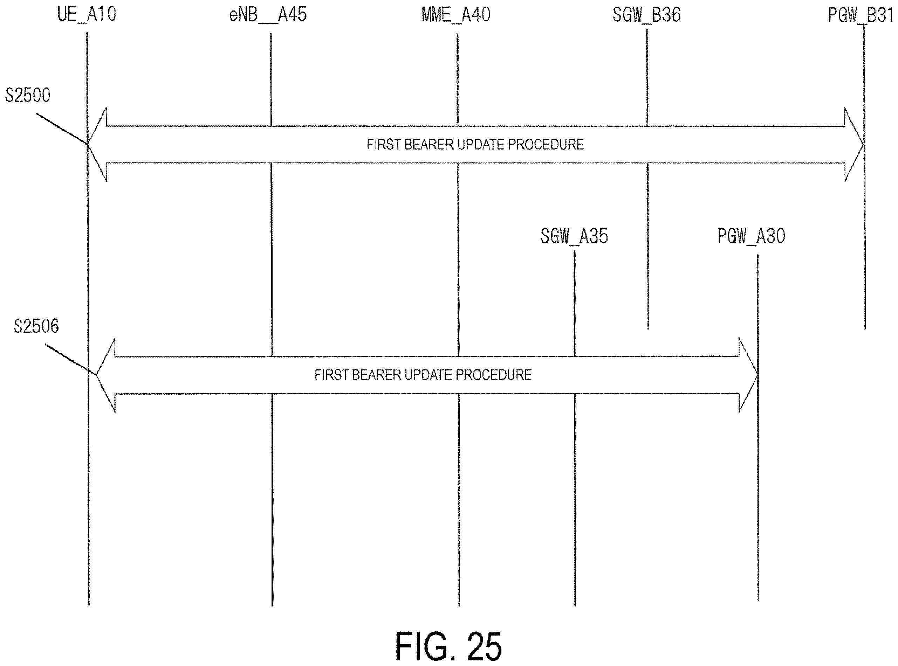

An example of steps of the first efficient path change procedure will be described below with reference to FIG. 25.

First, the UE_A 10 performs a first bearer update procedure for the second PDN connection (S2500). Details of the first bearer update procedure will be described later.

Based on completion of the first bearer update procedure for the second PDN connection, the UE_A 10 next performs the first bearer update procedure for the first PDN connection (S2506).

In other words, based on the reception of the modify EPS bearer context request message and/or the transmission of the modify EPS bearer context accept message for the second PDN connection, the UE_A 10 transmits, to the MME_A 40, a bearer resource modification request message for the first PDN connection.

Upon completion of the first bearer update procedure for the first PDN connection, the UE_A 10 and/or the core network_A 90 completes the first efficient path change procedure.

In other words, based on the transmission and/or reception of the modify EPS bearer context accept request message for the second PDN connection and/or the transmission and/or reception of the modify EPS bearer context accept message for the first PDN connection, the UE_A 10 and/or the core network_A 90 completes the first efficient path change procedure.

Based on the completion of the first efficient path change procedure, the UE_A 10 and/or the core network_A 90 can change the efficient path from the first PDN connection to the second PDN connection.

The efficient path change procedure initiated by the UE_A 10 may not necessarily be limited to the procedure described above.

### 1.4.3.2. Example of Second Efficient Path Change Procedure

The second efficient path change procedure is the efficient path change procedure initiated by the core network_A 90.

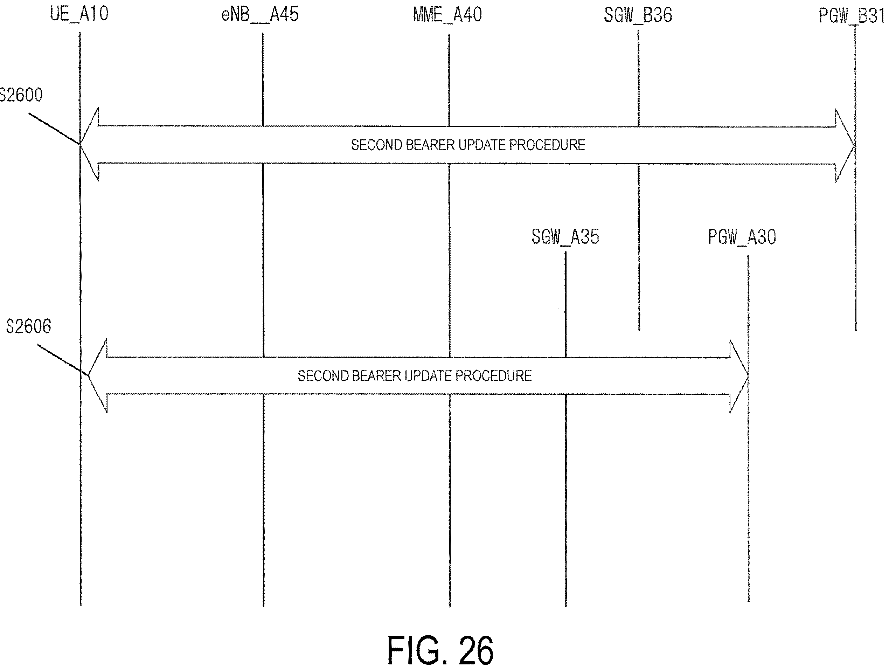

An example of steps of the second efficient path change procedure will be described below with reference to FIG. 26.

First, the UE_A 10 and/or the core network_A 90 performs the second bearer update procedure for the second PDN connection (S2600). Details of the second bearer update procedure will be described later.

Based on completion of the second bearer update procedure for the second PDN connection, the UE_A 10 and/or the core network_A 90 next performs the second bearer update procedure for the first PDN connection (S2606).

In other words, based on the transmission of the modify EPS bearer context request message and/or the reception of the modify EPS bearer context accept message for the second PDN connection, the core network_A 90 transmits, to the UE_A 10, a modify EPS bearer context request message for the first PDN connection.

Upon completion of the first bearer update procedure for the first PDN connection, the UE_A 10 and/or the core network_A 90 completes the first efficient path change procedure.

In other words, based on the transmission and/or reception of the modify EPS bearer context accept message for the second PDN connection and/or the transmission and/or reception of the modify EPS bearer context accept message for the first PDN connection, the UE_A 10 and/or the core network_A 90 completes the second efficient path change procedure.

Based on the completion of the second efficient path change procedure, the UE_A 10 and/or the core network_A 90 can change the efficient path from the first PDN connection to the second PDN connection.

The efficient path change procedure initiated by the core network_A 90 may not necessarily be limited to the procedure described above.

### 1.4.3.3. Example of Third Efficient Path Change Procedure

The third efficient path change procedure is the efficient path change procedure initiated by the arbitrary device.

The arbitrary device may be another UE_A 10 or a device in the core network_A 90, may be a server device on the PDN_A 5, or may be an application server provided to the PDN_A 5. The arbitrary device may be other than the above.

A trigger with which the arbitrary device starts the third efficient path change procedure may be change in policy or may be detection that the efficient path is not optimal. The trigger with which the arbitrary device starts the third efficient path change procedure may be other than the above.

Based on the trigger to start the efficient path change procedure, the arbitrary device may transmit information indicating change of the efficient path, to the UE_A 10 and/or the core network_A 90.

The information indicating change of the efficient path may be information indicating a request to change the efficient path, information indicating an efficient path after the change, information indicating that the efficient path is not optimal, information indicating the efficient path to be changed, or information indicating a communication path to be an efficient path.

The UE_A 10 and/or the core network_A 90 may receive, from the arbitrary device, information indicating change of the efficient path.

Based on the reception of the information indicating change of the efficient path, the UE_A 10 and/or the core network_A 90 may change the efficient path.

The change of the efficient path may be change of the communication path indicated by the efficient path, re-selection of a communication path to be an efficient path, or change of information associated with the efficient path.

Specifically, the UE_A 10 may change information associated with the efficient path in the UE context.

The MMF_A 40 may update information associated with the efficient path in the MME context, and the PGW_A 30 and/or the PGW_B 31 and/or the SGW_A 35 and/or the SGW_B 36 may update information associated with the efficient path in the EPS context.

Based on the change of the efficient path, the UE_A 10 and/or the core network_A 90 may return a response message to the arbitrary device, or the UE_A 10 and the core network_A 90 may transmit and receive a message for notification that the efficient path has been changed, to and from each other.

Based on the change of the efficient path and/or the transmission and/or reception of the message for the notification that the efficient path has been changed, the UE_A 10 and/or the core network_A 90 may complete the third efficient path change procedure.

Based on the completion of the third efficient path change procedure, the UE_A 10 and/or the core network_A 90 can change the efficient path from the first PDN connection to the second PDN connection.

Here, in a case that the arbitrary device is an application server provided to the PDN_A 5, the arbitrary device and/or the UE_A 10 may transmit and/or receive the information indicating the change of the efficient path included in the message transmitted and/or received through the PDN connection.

More specifically, the arbitrary device may transmit, to the UE_A 10, a message including the information indicating the change of the efficient path and transmitted and/or received through the PDN connection, or may receive, from the UE, a message including information for response of the efficient path change procedure and transmitted and/or received through the PDN connection.

In other words, the UE_A 10 may receive the information indicating the change of the efficient path through a message transmitted and/or received through the PDN connection, or may transmit the information for the response of the efficient path change procedure included in a message transmitted and/or received through the PDN connection.

The message transmitted and/or received through the PDN connection may be user data transmitted and/or received through the PDN connection.

In the case that the arbitrary device is an application server provided to the PDN_A 5, the arbitrary device may transmit a message including information indicating change of the efficient path, to a gateway device in the core network_A 90 and/or to a device in an access network or may receive a message including information for the response of the efficient path change procedure from the gateway device in the core network_A 90 and/or the device in the access network.

In other words, the gateway device in the core network_A 90 and/or the device in the access network may receive, from the arbitrary device, a message including information indicating change of the efficient path or may transmit, to the arbitrary device, a message including information for the response of the efficient path change procedure.

The gateway device in the core network_A 90 and/or the device in the access network may be the PGW_A 30, the SCEF, or the LGW.

The third efficient path change procedure may not necessarily be limited to the procedure described above.

### 1.4.3.4. Example of First Bearer Update Procedure

The first bearer update procedure is a bearer update procedure initiated by the UE_A 10.

In the first bearer update procedure, the SGW_A 35 may be the SGW_B 36, and the PGW_A 30 may be the PGW_B 31.

Hence, the first bearer update procedure will be described by using the SGW_A 35 and the PGW_A 30.

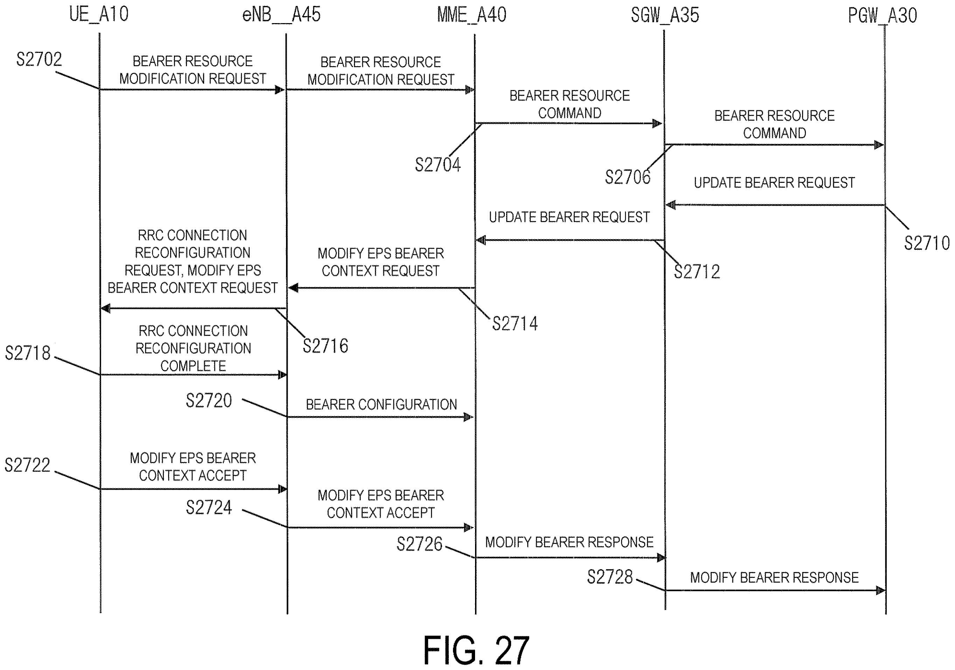

An example of steps of the first bearer update procedure will be described below with reference to FIG. 27.

First, the UE_A 10 transmits a bearer resource modification request message to the MME_A 40 (S2702). Note that the UE_A 10 may transmit the bearer resource modification request message to the eNB_A 45, and the transmitted bearer resource modification request message may be transferred to the MMF_A 40 via the eNB 45.

The UE_A 10 may include at least the fourth identification information and/or the fifth identification information and/or the eleventh identification information and/or the thirteenth identification information in the bearer resource modification request message. By transmitting the bearer resource modification request message including the fourth identification information and/or the fifth identification information and/or the eleventh identification information and/or the thirteenth identification information, the UE_A 10 may request change of the efficient path or may indicate a communication path to be an efficient path after the requesting change.

Further, the UE_A 10 may transmit an EPS bearer ID and/or the TFT included in the bearer resource modification request message.

The MMF_A 40 receives the bearer resource modification request message. In addition, based on the reception of the bearer resource modification request message, the MMF_A 40 acquires the fourth identification information and/or the fifth identification information and/or the eleventh identification information and/or the thirteenth identification information.

Further, the MMF_A 40 may receive the EPS bearer ID and/or the TFT, based on the reception of the bearer resource modification request message.

Based on information included in the bearer resource modification request message and/or the subscriber information and/or the operator policy and/or the identification information held by the MMF_A 40, the MMF_A 40 may determine, with respect to the UE_A 10, change of the efficient path and/or a communication path to be an efficient path after the change.

For example, the MMF_A 40 may determine, as the efficient path after the change, a communication path associated with the TFT indicated by the fourth identification information and/or the fifth identification information.

Further, instead of the communication path associated with the TFT indicated by the fourth identification information and/or the fifth identification information, the MMF_A 40 may determine a default communication path and/or a communication path based on the subscriber information or the operator policy as the efficient path after the change.

The MMF_A 40 may transmit the TFT associated with the efficient path after the change identification information included in the ninth identification information.

The MMF_A 40 may transmit information identifying the TFT associated with the efficient path after the change included in the tenth identification information.

The MMF_A 40 may transmit the thirteenth identification information associated with the communication path determined as the efficient path.

The efficient path change method is not limited to the above.

Based on the reception of the bearer resource modification request message and/or the determination of change of an efficient path and/or a communication path to be an efficient path after the change, the MMF_A 40 transmits a bearer resource command message to the SGW_A 35 (S2704).

The MME_40 may transmit at least the fourth identification information and/or the fifth identification information and/or the ninth identification information and/or the tenth identification information and/or the thirteenth identification information and/or the eleventh identification information and/or the twelfth identification information included in the bearer resource command message.

Here, in the description above, the MMF_A 40 is described as determining change of an efficient path, but in place of the MMF_A 40, the PGW_A 30 may determine change of an efficient path and/or a communication path to be an efficient path. In this case, the MMF_A 40 may transmit the bearer resource command message without including the ninth identification information and/or the tenth identification information and/or the thirteenth identification information and/or the twelfth identification information.

The SGW_A 35 receives the bearer resource command message. In addition, based on the reception of the bearer resource command message, the SGW_A 35 acquires the fourth identification information and/or the fifth identification information and/or the ninth identification information and/or the tenth identification information and/or the thirteenth identification information and/or the eleventh identification information and/or the twelfth identification information.

Based on the reception of the bearer resource command message, the SGW_A 35 transmits the bearer resource command message to the PGW_A 30 (S2706).

The SGW_A 35 may transmit at least the fourth identification information and/or the fifth identification information and/or the ninth identification information and/or the tenth identification information and/or the thirteenth identification information and/or the eleventh identification information and/or the twelfth identification information included in the bearer resource command message.

The PGW_A 30 receives the bearer resource command message. In addition, based on the reception of the bearer resource command message, the PGW_A 30 acquires the fourth identification information and/or the fifth identification information and/or the ninth identification information and/or the tenth identification information and/or the thirteenth identification information and/or the eleventh identification information and/or the twelfth identification information.

Based on the information included in the bearer resource command message and/or the subscriber information and/or the operator policy and/or the identification information held by the PGW_A 30, the PGW_A 30 may determine, with respect to the UE_A 10, change of the efficient path and/or a communication path to be an efficient path after the change.

For example, the PGW_A 30 may determine, as the efficient path after the change, a communication path associated with the TFT indicated by the fourth identification information and/or the fifth identification information.

The PGW_A 30 may determine, as the efficient path after the change, a default communication path and/or a communication path based on the subscriber information or the operator policy, instead of the communication path associated with the TFT indicated by the fourth identification information and/or the fifth identification information.

The PGW_A 30 may transmit the TFT associated with the efficient path after the change included in the ninth identification information.

The PGW_A 30 may transmit information identifying the TFT associated with the efficient path after the change included in the tenth identification information.

The PGW_A 30 may transmit the thirteenth identification information associated with the communication path determined as the efficient path.

The efficient path modification method is not limited to the above.

Here, in the description above, the case that the PGW_A 30 determines change of the efficient path has been described, but in a case that the MMF_A 40 has determined change of an efficient path, the PGW_A 30 may not necessarily determine change of the efficient path and/or a communication path to be an efficient path.

In other words, in a case that the PGW_A 30 has received the ninth identification information and/or the tenth identification information and/or the thirteenth identification information and/or the twelfth identification information, the PGW_A 30 may not necessarily determine change of the efficient path and/or a communication path to be an efficient path.

Based on the reception of the bearer resource command message and/or the determination of change of the efficient path and/or a communication path to be an efficient path after the change, the PGW_A 30 transmits an update bearer request message to the SGW_A 35 (S2710).

The PGW_A 30 may include at least the ninth identification information and/or the tenth identification and/or the thirteenth identification information and/or the twelfth identification information in the update bearer request message.

Note that the update bearer request message may be a response message corresponding to the bearer resource command message.

The SGW_A 35 receives the update bearer request message. In addition, based on the reception of the update bearer request message, the SGW_A 35 acquires the ninth identification information and/or the tenth identification information and/or the thirteenth identification information and/or the twelfth identification information.

Based on the reception of the update bearer request message, the SGW_A 35 transmits the update bearer request message to the MME_A 40 (S2712).

The SGW_A 35 may include at least the ninth identification information and/or the tenth identification information and/or the thirteenth identification information and/or the twelfth identification information in the update bearer request message.

The MME_A 40 receives the update bearer request message. In addition, based on the reception of the update bearer request message, the MME_A 40 acquires the ninth identification information and/or the tenth identification information and/or the thirteenth identification information and/or the twelfth identification information.

Based on the reception of the update bearer request message, the MMF_A 40 transmits a modify EPS bearer context request message to the eNB_A45 (S2714).

The MMF_A 40 may include at least the ninth identification information and/or the tenth identification information and/or the thirteenth identification information and/or the twelfth identification information in the modify EPS bearer context request message.

Further, the MMF_A 40 may transmit an EPS bearer ID and/or the TFT included in the modify EPS bearer context request message.

Note that the modify EPS bearer context request message may be a response message to the modify bearer resource request message.

The eNB_A 45 receives the modify EPS bearer context request message and transmits, to the UE_A 10, an RRC message including the modify EPS bearer context request message (S2716). Note that the RRC message may be an RRC connection reconfiguration request message.

The UE_A 10 receives the RRC message including the modify EPS bearer context request message. Furthermore, in a case that the ninth identification information and/or the tenth identification information and/or the thirteenth identification information and/or the twelfth identification information is included in the modify EPS bearer context request message, the UE_A 10 acquires the identification information.

Based on the reception of the modify EPS bearer context request message, the UE_A 10 may receive the EPS bearer ID and/or the TFT.

Based on the reception of the modify EPS bearer context request message and/or the information included in the modify EPS bearer context request message, the UE_A 10 may identify approval of change of the efficient path and/or a communication path to be an efficient path after the change.

More specifically, based on the reception of the twelfth identification information, the UE_A 10 may identify that change of the efficient path has been approved.

The UE_A 10 may identify, as an efficient path after the change, the communication path associated with the TFT included in the received ninth identification information and/or the TFT identified by the tenth identification information.

The UE_A 10 may identify, as an efficient path, the communication path associated with the received thirteenth identification information.

In a case that information indicating an efficient path is already stored, the UE_A 10 may identify, based on the reception of the ninth identification information and/or the tenth identification information and/or the thirteenth identification information, the communication path identified by received identification information, as an efficient path.

In a case that the information indicating an efficient path associated with the TFT and the information indicating an efficient path associated with the PDN connection and/or the UE_A 10 are different from each other, the UE_A 10 may change an efficient path in accordance with user data to transmit and/or receive.

As an example, a description will be given of a case with information indicating an efficient path associated with TFT 1, which is one of TFTs.

In a case of transmitting and/or receiving user data identified by TFT 1, the UE_A 10 may identify, as an efficient path, the communication path identified by information indicating an efficient path associated with TFT 1.

In the case of transmitting and/or receiving user data identified by TFT 1, the UE_A 10 may identify, as an efficient path, the communication path identified by information indicating an efficient path associated with the PDN connection and/or the UE_A 10.

In order to respond to the received RRC message, the UE_A 10 transmits the RRC message to the eNB_A45 (S2718). The RRC message may be an RRC connection reconfiguration complete message.

The eNB_A 45 receives an RRC connection reconfiguration message, and transmits a bearer configuration message to the MME_A 40, based on the reception (S2720).

Based on the reception of the modify EPS bearer context request message, the UE_A 10 transmits the RRC message including a modify EPS bearer context accept message to the eNB_A45 (S2722). Here, the modify EPS bearer context accept message may be a response message to the modify EPS bearer context request message.

Note that the RRC message to be transmitted while including the modify EPS bearer context accept message may be a Direct Transfer message.

The eNB_45 receives the RRC message including the modify EPS bearer context accept message and transmits the modify EPS bearer context accept message to the MMF_A 40 (S2724).

The MMF_A 40 receives the modify EPS bearer context accept message.

Based on the reception of the modify EPS bearer context accept message, the MME_A 40 may transmit a modify bearer response message to the SGW_A 35 (S2726).

Note that the modify bearer response message may be a response message to the modify bearer request message.

The SGW_A 35 receives the modify bearer response message.

Based on the reception of the modify bearer response message, the SGW_A 35 transmits the modify bearer response message to the PGW_A 30 (S2728).

The PGW_A 30 receives the modify bearer response message.

By the above-described steps, the UE_A 10 and/or the core network_A 90 completes the first bearer update procedure. Upon completion of the first bearer update procedure, the UE_A 10 and/or the core network_A 90 may change the efficient path.

Note that by the first bearer update procedure, the UE_A 10 can store the TFT associated with the received efficient path after the change in any UE context described with reference to any of FIGS. 21(b) to 21(d).

More specifically, through the first bearer update procedure, the UE_A 10 can acquire the TFT associated with the efficient path after the change and/or information identifying the TFT associated with the efficient path after the change from the core network_A 90, and store the TFT and/or the information in a UE context for each PDN connection and/or a UE context for each bearer.

By the first bearer update procedure, the MMF_A 40 can store the TFT associated with the efficient path after the change in an MME context for each PDN connection and/or an MME context for each bearer.

By the first bearer update procedure, the SGW_A 35 and/or the PGW_A 30 can store the TFT associated with the efficient path after the change in an EPS bearer context for each PDN connection and/or an EPS bearer context for each EPS bearer.

### 1.4.3.5. Example of Second Bearer Update Procedure

The second bearer update procedure is a bearer update procedure initiated by the core network_A 90.

In the second bearer update procedure, the SGW_A 35 may be the SGW_B 36, and the PGW_A 30 may be the PGW_B 31.

Hence, the second bearer update procedure will be described by using the SGW_A 35 and the PGW_A 30.

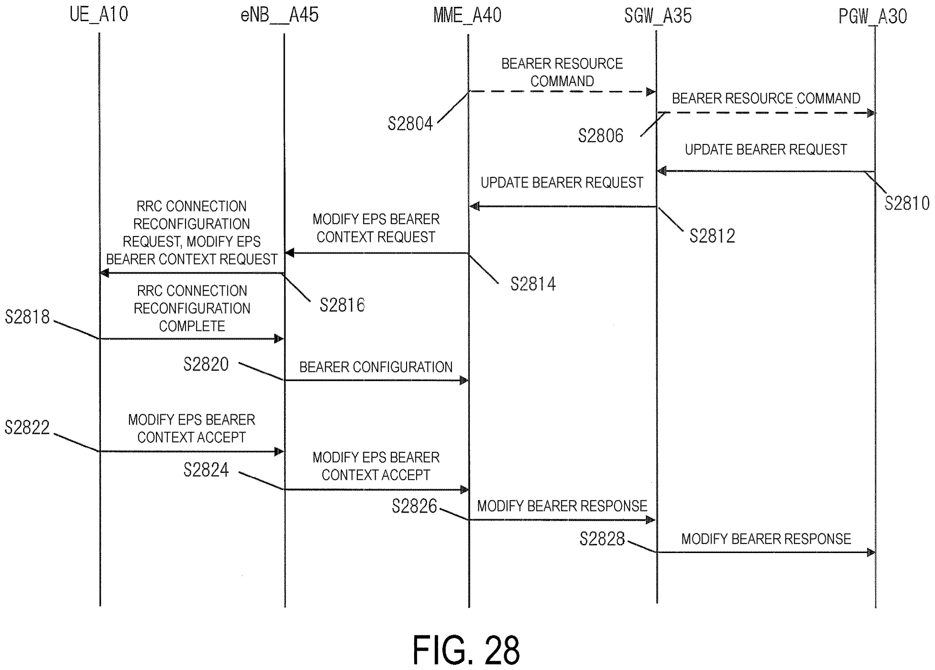

An example of steps of the second bearer update procedure will be described below with reference to FIG. 28.

The MMF_A 40 may transmit a bearer resource command message to the SGW_A 35 (S2804).

The MMF_A 40 may transmit at least the fourth identification information and/or the fifth identification information and/or the eleventh identification information and/or the thirteenth identification information included in the bearer resource command message.

By transmitting the bearer resource command message including the fourth identification information and/or the fifth identification information and/or the eleventh identification information and/or the thirteenth identification information, the MMF_A 40 may request change of the efficient path or may indicate a communication path to be an efficient path after the requesting change.

The SGW_A 35 receives the bearer resource command message. In addition, based on the reception of the bearer resource command message, the SGW_A 35 acquires the fourth identification information and/or the fifth identification information and/or the eleventh identification information and/or the thirteenth identification information.

Based on the reception of the bearer resource command message, the SGW_A 35 may transmit the bearer resource command message to the PGW_A 30 (S2806).

The SGW_A 35 may transmit at least the fourth identification information and/or the fifth identification information and/or the eleventh identification information and/or the thirteenth identification information included in the bearer resource command message.

The PGW_A 30 receives the bearer resource command message. Further, based on the reception of the bearer resource command message, the PGW_A 30 acquires the fourth identification information and/or the fifth identification information and/or the eleventh identification information and/or the thirteenth identification information.

Based on the reception of the bearer resource command message, the PGW_A 30 transmits an update bearer request message to the SGW_A 35 (S2810).

The PGW_A 30 may include at least the fourth identification information and/or the fifth identification and/or the eleventh identification information and/or the thirteenth identification information in the update bearer request message.

Note that the PGW_A 30 may transmit the update bearer request message to the SGW_A 35 based on the operator policy and the subscriber information, not based on the reception of the bearer resource command message.

In other words, the PGW_A 30 may start the second bearer update procedure, based on the operator policy, the subscriber information, or a function provided by another device, not based on the reception of the bearer resource command message.

The function provided by another device may, for example, be a function for detecting that update of the efficient path is necessary.

In this case, the bearer resource command message that the MMF_A 40 and/or the SGW_A 35 and/or the PGW_A 30 transmit and/or receive can be omitted.

By transmitting the update bearer request message including the fourth identification information and/or the fifth identification information and/or the eleventh identification information and/or the thirteenth identification information, the PGW_A 30 may request change of the efficient path or may indicate a communication path to be an efficient path after the requesting change.

The SGW_A 35 receives the update bearer request message. In addition, based on the reception of the update bearer request message, the SGW_A 35 acquires the fourth identification information and/or the fifth identification information and/or the eleventh identification information and/or the thirteenth identification information.

Based on the reception of the update bearer request message, the SGW_A 35 transmits the update bearer request message to the MME_A40 (S2812).

The SGW_A 35 may include at least the fourth identification information and/or the fifth identification and/or the eleventh identification information and/or the thirteenth identification information in the update bearer request message.

The MME_A 40 receives the update bearer request message. In addition, based on the reception of the update bearer request message, the MMF_A 40 acquires the fourth identification information and/or the fifth identification information and/or the eleventh identification information and/or the thirteenth identification information.

Based on the reception of the update bearer request message, the MMF_A 40 transmits a modify EPS bearer context request message to the eNB_A 45 (S2814).

The MMF_A 40 may include at least the fourth identification information and/or the fifth identification information and/or the eleventh identification information and/or the thirteenth identification information in the modify EPS bearer context request message.

Further, the MMF_A 40 may transmit an EPS bearer ID and/or the TFT included in the modify EPS bearer context request message.

By transmitting the modify EPS bearer context request message including the fourth identification information and/or the fifth identification information and/or the eleventh identification information and/or the thirteenth identification information, the MMF_A 40 may request change of the efficient path or may indicate a communication path to be an efficient path after the requesting change.

The eNB_A 45 receives the modify EPS bearer context request message and transmits, to the UE_A 10, an RRC message including the modify EPS bearer context request message (S2816). Note that the RRC message may be an RRC connection reconfiguration request message.

The UE_A 10 receives the RRC message including the modify EPS bearer context request message. Furthermore, in a case that the fourth identification information and/or the fifth identification information and/or the eleventh identification information and/or the thirteenth identification information is included in the modify EPS bearer context request message, the UE_A 10 acquires the identification information.

Based on the reception of the modify EPS bearer context request message, the UE_A 10 may receive the EPS bearer ID and/or the TFT.

Based on the reception of the modify EPS bearer context request message and/or the information included in the modify EPS bearer context request message and/or the identification information held by the UE_A 10, the UE_A 10 may determine change of the efficient path of the UE_A 10 and/or a communication path to be an efficient path after the change.

For example, the UE_A 10 may determine, as the efficient path after the change, a communication path associated with the TFT indicated by the fourth identification information and/or the fifth identification information.

The UE_A 10 may determine, as the efficient path after the change, a communication path desired by the UE_A 10, instead of a communication path associated with the TFT indicated by the fourth identification information and/or the fifth identification information.

The UE_A 10 may transmit the TFT associated with the efficient path after the change included in the ninth identification information.

The UE_A 10 may transmit information identifying the TFT associated with the efficient path after the change in the tenth identification information.

The UE_A 10 may transmit the thirteenth identification information associated with the communication path determined as the efficient path.

Note that a method of changing the efficient path of the UE_A 10 is not limited to the above.

In order to respond to the received RRC message, the UE_A 10 transmits the RRC message to the eNB_A45 (S2818). The RRC message may be an RRC connection reconfiguration complete message.

The eNB_A 45 receives an RRC connection reconfiguration message and transmits a bearer configuration message to the MMF_A 40, based on the reception (S2820).

Based on the reception of the modify EPS bearer context request message, the UE_A 10 transmits the RRC message including a modify EPS bearer context accept message to the eNB_A45 (S2822).

The UE_A 10 may transmit at least the ninth identification information and/or the tenth identification information and/or the thirteenth identification information and/or the twelfth identification information in the modify EPS bearer context accept message.

Here, the modify EPS bearer context accept message may be a response message to the modify EPS bearer context request message.

Note that the RRC message to be transmitted while including the modify EPS bearer context accept message may be a Direct Transfer message.

The eNB_45 receives the RRC message including the modify EPS bearer context accept message and transmits the modify EPS bearer context accept message to the MME_A 40 (S2824).

The MME_A 40 receives the modify EPS bearer context accept message. In addition, based on the reception of the modify EPS bearer context accept message, the MME_A 40 acquires the ninth identification information and/or the tenth identification information and/or the thirteenth identification information and/or the twelfth identification information.

Based on the reception of the modify EPS bearer context accept message and/or the information included in the modify EPS bearer context accept message, the MME_A 40 may identify approval of change of the efficient path and/or a communication path to be an efficient path after the change.

More specifically, based on the reception of the twelfth identification information, the MME_A 40 may identify that change of the efficient path has been approved.

The MME_A 40 may identify, as an efficient path after the change, the communication path associated with the TFT included in the received ninth identification information and/or the TFT identified by the tenth identification information.

The MME_A 40 may identify, as an efficient path, the communication path associated with the received thirteenth identification information.

In a case that information indicating an efficient path is already stored, the MME_A 40 may identify, based on the reception of the ninth identification information and/or the tenth identification information and/or the thirteenth identification information, the communication path identified by received identification information, as an efficient path.

Based on the reception of the modify EPS bearer context accept message, the MME_A 40 transmits a modify bearer response message to the SGW_A 35 (S2826).

The MME_A 40 may transmit at least the ninth identification information and/or the tenth identification information and/or the thirteenth identification information and/or the twelfth identification information included in the modify bearer response message.

Note that the modify bearer response message may be a response message to the modify bearer request message.

The SGW_A 35 receives the modify bearer response message. In addition, based on the reception of the modify bearer response message, the SGW_A 35 acquires the ninth identification information and/or the tenth identification information and/or the thirteenth identification information and/or the twelfth identification information.

Based on the reception of the modify bearer response message, the SGW_A 35 transmits the modify bearer response message to the PGW_A 30 (S2828).

The SGW_A 35 may transmit at least the ninth identification information and/or the tenth identification information and/or the thirteenth identification information and/or the twelfth identification information included in the modify bearer response message.

The PGW_A 30 receives the modify bearer response message. In addition, based on the reception of the modify bearer response message, the PGW_A 30 acquires the ninth identification information and/or the tenth identification information and/or the thirteenth identification information and/or the twelfth identification information.

Based on the reception of the modify EPS bearer context accept message and/or the information included in the modify EPS bearer context accept message, the PGW_A 30 may identify approval of change of the efficient path of the UE_A 10 and/or a communication path to be an efficient path after the change.

More specifically, based on the reception of the twelfth identification information, the PGW_A 30 may identify that change of the efficient path has been approved.

The PGW_A 30 may identify, as an efficient path after the change, the communication path associated with the TFT included in the received ninth identification information and/or the TFT identified by the tenth identification information.

The PGW_A 30 may identify, as an efficient path, the communication path associated with the received thirteenth identification information.

In a case that information indicating an efficient path is already stored, the PGW_A 30 may identify, based on the reception of the ninth identification information and/or the tenth identification information and/or the thirteenth identification information, the communication path identified by received identification information, as an efficient path.

In a case that the information indicating an efficient path associated with the TFT and the information indicating an efficient path associated with the PDN connection and/or the UE_A 10 are different from each other, the PGW_A 30 may change an efficient path in accordance with user data to transmit and/or receive.

As an example, a description will be given of a case with information indicating an efficient path associated with TFT 1, which is one of TFTs.

In a case of transmitting and/or receiving user data identified by TFT 1, the PGW_A 30 may identify, as an efficient path, the communication path identified by information indicating an efficient path associated with TFT 1.

In the case of transmitting and/or receiving user data not identified by TFT 1, the PGW_A 30 may identify, as an efficient path, the communication path identified by information indicating an efficient path associated with the PDN connection and/or the UE_A 10.

By the above-described steps, the UE_A 10 and/or the core network_A 90 completes the second bearer update procedure. Upon completion of the second bearer update procedure, the UE_A 10 and/or the core network_A 90 may change the efficient path.

Note that by the second bearer update procedure, the UE_A 10 can store the TFT associated with the efficient path after the change in any UE context described with reference to any of FIGS. 21(b) to 21(d).

More specifically, through the second bearer update procedure, the UE_A 10 can store information identifying the communication path to be an efficient path after the change in a UE context for each PDN connection and/or a UE context for each bearer.

Through the second bearer update procedure, the MME_A 40 can acquire the TFT associated with the efficient path after the change and/or information identifying the TFT associated with the efficient path after the change from the UE_A 10, and store the TFT and/or the information in an MME context for each PDN connection and/or an MME context for each bearer.

Through the second bearer update procedure, the SGW_A 35 and/or the PGW_A 30 can acquire the TFT associated with the efficient path after the change and/or information identifying the TFT associated with the efficient path after the change from the UE_A 10, and store the TFT and/or the information in an EPS bearer context for each PDN connection and/or an EPS bearer context for each EPS bearer.

1.4.3.6. Modified Example of Efficient Path Change Procedure

Regarding the core network_A 90 in the above-described example of the efficient path change procedure, a transmission and/or reception method change procedure is described for a case adopting a core network configured to include the MME_A 40, the SGW_A 35, and the PGW_A 30 described with reference to FIGS. 2A and 2B; however, the core network_A 90 may be configured to include other devices.

In this case, a NAS message, such as the bearer resource modification request message or the modify EPS bearer context accept message described in the present procedure and transmitted by the UE_A 10, is received not by the MME_A 40 but another device in the core network_A 90.

Accordingly, the reception and the processes of the NAS message by the MME_A 40 in the above description can be replaced with those performed by a device in the core network_A 90.

Furthermore, the transmission and the processes of the NAS message such as the modify EPS bearer context request message or the like by the MME_A 40 in the above description can be replaced with those performed by the device in the core network_A 90.

### 2. Modified Example

A program running on each apparatus or device according to the present invention may be a program for controlling a Central Processing Unit (CPU) and the like to cause a computer to function so as to enable the functions of the embodiments of the present invention. Such a program or information used in the program is stored temporarily in a volatile memory such as a Random Access Memory (RAM), a non-volatile memory such as a flash memory, a Hard Disk Drive (HDD), or other storage device systems.

Note that a program for enabling the functions of the embodiments of the present invention may be recorded in a computer-readable recording medium. This program recorded in the recording medium may be read by a computer system to be performed, thereby enabling the functions. It is assumed that the "computer system" refers to a computer system built into a device, and the computer system includes an OS and hardware components such as a peripheral device. Further, the "computer-readable recording medium" may be a semiconductor recording medium, an optical recording medium, a magnetic recording medium, a medium that holds a program dynamically for a short period of time, or other computer-readable recording media.

Further, respective functional blocks or various characteristics of the apparatuses and devices used in the embodiments above may be implemented or performed by an electric circuit, for example by an integrated circuit or by multiple integrated circuits. An electric circuit designed to perform the functions described in this specification may include a general-purpose processor, a digital signal processor (DSP), an application specific integrated circuit (ASIC), a field programmable gate array (FPGA), or other programmable logic devices, discrete gates or transistor logic, discrete hardware components, or a combination of these. The general-purpose processor may be a microprocessor, or a processor of a known type, a controller, a micro-controller, or a state machine. The electric circuits described above may include digital circuits or analog circuits. Furthermore, in a case where with advances in semiconductor technology, a circuit integration technology with which the current integrated circuits are replaced appears, the present invention can also adopt a new integrated circuit based on the technology.

Note that the invention of the present patent application is not limited to the above-described embodiments. In the embodiments, the apparatuses have been described as examples, but the present invention is not limited to such apparatuses, and is applicable to a fixed-type or a stationary-type electronic apparatus installed indoors or outdoors, for example, a terminal apparatus or communication device such as an Audio-Video (AV) apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of the present invention defined by claims, and embodiments that are made by suitably combining technical means disclosed according to the different embodiments are also included in the technical scope of the present invention. Furthermore, a configuration in which a constituent element that achieves the same effect is substituted for the one that is described according to the embodiments is also included in the technical scope of the present invention.

### Reference Signs List

1 Communication system
5 PDN_A
10 UE_A
20 UTRAN_A
22 eNB (UTRAN)_A
24 RNC_A
25 GERAN_A
26 BSS_A
30 PGW_A
31 PGW_B
35 SGW_A
36 SGW_B
40 MME_A
45 eNB_A
50 HSS_A
55 AAA_A
60 PCRF_A
65 ePDG_A
70 WLAN ANa
72 WLAN APa
74 TWAG_A
75 WLAN ANb
76 WLAN APb
80 LTE AN_A
90 Core network_A
100 CIOT AN_A

## Claims

1. A communication control method for a terminal apparatus comprising the steps of:
receiving, from a core network via a base station apparatus, an attach accept message including at least first bearer identification information and/or a first APN and/or a first IP address, and establishing a first Packet Data Network (PDN) connection with a first Packet Data Gateway (PGW);
receiving, from the core network via the base station apparatus, an activate default EPS bearer context request message including at least second bearer identification information and/or a second APN and/or a second IP address and establishing a second PDN connection with a second PGW;
receiving, from the core network via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path; and
changing the efficient path from the second PDN connection to the first PDN connection.

2. A communication control method for a terminal apparatus comprising the steps of:
receiving, from a core network via a base station apparatus, an attach accept message including at least first bearer identification information and/or a first APN and/or a first IP address, and establishing a first Packet Data Network (PDN) connection with a first Packet Data Gateway (PGW);
receiving, from the core network via the base station apparatus, an activate default EPS bearer context request message including at least second bearer identification information and/or a second APN and/or a second IP address and establishing a second PDN connection with a second PGW;
transmitting, to the core network via the base station apparatus, a bearer resource modification request message including at least first identification information and/or the first bearer identification information and/or a Traffic Flow Template (TFT) identifying a flow for communicating by using an efficient path, the first identification information being information indicating a request to change the efficient path; and
changing the efficient path from the second PDN connection to the first PDN connection.

3. The communication control method for a terminal apparatus according to claim 1 or 2, wherein
the second identification information is information indicating a request to select the efficient path and/or information indicating a request for notification of the efficient path, and/or information indicating a request to activate an efficient path notification function of the core network, the communication control method comprising the step of
transmitting, to the core network via the base station apparatus, an attach request message including at least the second identification information.

4. The communication control method for a terminal apparatus according to claim 3, wherein
the third identification information is information indicating that the terminal apparatus is allowed to select the efficient path,
the fourth identification information is information indicating that the core network has a capability of selecting the efficient path and/or information indicating that the core network has the efficient path notification function, and
the attach accept message further includes at least the third identification information and/or the fourth identification information.

5. The communication control method for a terminal apparatus according to claim 1 or 2, wherein the activate default EPS bearer context request message includes at least the first identification information.

6. A communication control method for a Mobility Management Entity (MME), the communication control method comprising the steps of:
transmitting, to a terminal apparatus via a base station apparatus, an attach accept message including at least first bearer identification information and/or a first APN and/or a first IP address, and storing the first bearer identification information and/or the first APN and/or the first IP address associated with a first Packet Data Network (PDN) connection established between the terminal apparatus and a first Packet Data Gateway (PGW);
transmitting, to the terminal apparatus via the base station apparatus, an activate default EPS bearer context request message including at least second bearer identification information and/or a second APN and/or a second IP address and storing the second bearer identification information and/or the second APN and/or the second IP address associated with a second Packet Data Network (PDN) connection established between the terminal apparatus and a second Packet Data Gateway (PGW); and
transmitting, to the terminal apparatus via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path.

7. A communication control method for a Mobility Management Entity (MME) comprising the steps of:
transmitting, to a terminal apparatus via a base station apparatus, an attach accept message including at least first bearer identification information and/or a first APN and/or a first IP address, and storing the first bearer identification information and/or the first APN and/or the first IP address associated with a first Packet Data Network (PDN) connection established between the terminal apparatus and a first Packet Data Gateway (PGW);
transmitting, to the terminal apparatus via the base station apparatus, an activate default EPS bearer context request message including at least second bearer identification information and/or a second APN and/or a second IP address and storing the second bearer identification information and/or the second APN and/or the second IP address associated with a second Packet Data Network (PDN) connection established between the terminal apparatus and a second Packet Data Gateway (PGW); and
for change of an efficient path, receiving, from the terminal apparatus via the base station apparatus, a bearer resource modification request message including at least first identification information and/or the first bearer identification information and/or a Traffic Flow Template (TFT) identifying a flow for communicating by using the efficient path, the first identification information being information indicating that a communication path is the efficient path.

8. The communication control method for an MME according to claim 6 or 7, wherein
the second identification information is information indicating a request to select the efficient path and/or information indicating a request for notification of the efficient path, and/or information indicating a request to activate an efficient path notification function of a core network, the communication control method comprising the step of
receiving, from the terminal apparatus via the base station apparatus, an attach request message including at least the second identification information.

9. The communication control method for an MME according to claim 8, wherein the third identification information is information indicating that the terminal apparatus is allowed to select the efficient path, and
the fourth identification information is information indicating that the core network has a capability of selecting the efficient path and/or information indicating that a core network has the efficient path notification function, the communication control method comprising the step of
including at least the third identification information and/or the fourth identification information in the attach accept message.

10. The communication control method for an MME according to claim 6 or 7, wherein the activate default EPS bearer context request message includes at least the first identification information.

11. A terminal apparatus comprising:
a control unit configured to receive, from a core network via a base station apparatus, an attach accept message including at least first bearer identification information and/or a first APN and/or a first IP address, and establish a first Packet Data Network (PDN) connection with a first Packet Data Gateway (PGW),
the control unit receiving, from the core network via the base station apparatus, an activate default EPS bearer context request message including at least second bearer identification information and/or a second APN and/or a second IP address, and establishing a second PDN connection with a second PGW; and
a transmission and/or reception unit configured to receive, from the core network via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path,
the control unit changing the efficient path from the second PDN connection to the first PDN connection.

12. A terminal apparatus comprising:
a control unit configured to receive, from a core network via a base station apparatus, an attach accept message including at least first bearer identification information and/or a first APN and/or a first IP address, and establish a first Packet Data Network (PDN) connection with a first Packet Data Gateway (PGW),
the control unit receiving, from the core network via the base station apparatus, an activate default EPS bearer context request message including at least second bearer identification information and/or a second APN and/or a second IP address, and establishing a second PDN connection with a second PGW; and
a transmission and/or reception unit configured to transmit, to the core network via the base station apparatus, a bearer resource modification request message including at least first identification information and/or the first bearer identification information and/or a Traffic Flow Template (TFT) identifying a flow for communicating by using an efficient path, the first identification information being information indicating a request to change the efficient path,
the control unit changing the efficient path from the second PDN connection to the first PDN connection.

13. The terminal apparatus according to claim 11 or 12, wherein
the second identification information is information indicating a request to select the efficient path and/or information indicating a request for notification of the efficient path, and/or information indicating a request to activate an efficient path notification function of the core network, and
the transmission and/or reception unit transmits, to the core network via the base station apparatus, an attach request message including at least the second identification information.

14. The terminal apparatus according to claim 13, wherein
the third identification information is information indicating that the terminal apparatus is allowed to select the efficient path,
the fourth identification information is information indicating that the core network has a capability of selecting the efficient path and/or information indicating that the core network has the efficient path notification function, and
the transmission and/or reception unit receives the third identification information and/or the fourth identification information included in the attach accept message.

15. The terminal apparatus according to claim 11 or 12, wherein the transmission and/or reception unit receives the first identification information included in the activate default EPS bearer context request message.

16. A Mobility Management Entity (MME) comprising:
a transmission and/or reception unit configured to transmit, to a terminal apparatus via a base station apparatus, an attach accept message including at least first bearer identification information and/or a first APN and/or a first IP address; and
a control unit configured to store the first bearer identification information and/or the first APN and/or the first IP address associated with a first Packet Data Network (PDN) connection established between the terminal apparatus and a first Packet Data Gateway (PGW), wherein
the transmission and/or reception unit transmits, to the terminal apparatus via the base station apparatus, an activate default EPS bearer context request message including at least second bearer identification information and/or a second APN and/or a second IP address,
the control unit stores the second bearer identification information and/or the second APN and/or the second IP address associated with a second Packet Data Network (PDN) connection established between the terminal apparatus and a second Packet Data Gateway (PGW), and
the transmission and/or reception unit transmits, to the terminal apparatus via the base station apparatus, a modify EPS bearer context request including at least first identification information and/or the first bearer identification information and/or a Traffic Flow Template (TFT) identifying a flow for communicating by using an efficient path, the first identification information being information indicating that a communication path is the efficient path.

17. A Mobility Management Entity (MME) comprising:
a transmission and/or reception unit configured to transmit, to a terminal apparatus via a base station apparatus, an attach accept message including at least first bearer identification information and/or a first APN and/or a first IP address; and
a control unit configured to store the first bearer identification information and/or the first APN and/or the first IP address associated with a first Packet Data Network (PDN) connection established between the terminal apparatus and a first Packet Data Gateway (PGW), wherein
the transmission and/or reception unit transmits, to the terminal apparatus via the base station apparatus, an activate default EPS bearer context request message including at least second bearer identification information and/or a second APN and/or a second IP address,
the control unit stores the second bearer identification information and/or the second APN and/or the second IP address associated with a second Packet Data Network (PDN) connection established between the terminal apparatus and a second Packet Data Gateway (PGW), and
for change of an efficient path, the transmission and/or reception unit receives, from the terminal apparatus via the base station apparatus, a bearer resource modification request message including at least first identification information and/or the first bearer identification information and/or a Traffic Flow Template (TFT) identifying a flow for communicating by using the efficient path, the first identification information being information indicating that a communication path is the efficient path.

18. The MME according to claim 16 or 17, wherein
the second identification information is information indicating a request to select the efficient path and/or information indicating a request for notification of the efficient path, and/or information indicating a request to activate an efficient path notification function of a core network, and
the transmission and/or reception unit receives, from the terminal apparatus via the base station apparatus, an attach request message including at least the second identification information.

19. The MME according to claim 18, wherein
the third identification information is information indicating that the terminal apparatus is allowed to select the efficient path,
the fourth identification information is information indicating that the core network has a capability of selecting the efficient path and/or information indicating that a core network has the efficient path notification function, and
the control unit includes at least the third identification information and/or the fourth identification information in the attach accept message.

20. The MME according to claim 16 or 17, wherein the control unit includes at least the first identification information in the activate default EPS bearer context request message.
